# EUROPÄISCHE PATENTSCHRIFT

(11) **EP 4 121 825 B1**
(45) Veröffentlichungstag und Bekanntmachung des Hinweises auf die Patenterteilung: **20.08.2025**
(21) Anmeldenummer: 21713909.6
(22) Anmeldetag: 17.03.2021
(51) Int. Cl.: G05B 13/02, G05B 19/4097

(54) **COMPUTERIMPLEMENTIERTES VERFAHREN ZUM ERSTELLEN VON STEUERUNGSDATENSÄTZEN, CAD-CAM-SYSTEM UND FERTIGUNGSANLAGE**
COMPUTER-IMPLEMENTED METHOD FOR CREATING CONTROL DATA SETS, CAD-CAM SYSTEM AND PRODUCTION SYSTEM
PROCÉDÉ MIS EN OEUVRE PAR ORDINATEUR POUR CRÉER DES ENSEMBLES DE DONNÉES DE COMMANDE, SYSTÈME CAD-CAM ET SYSTÈME DE PRODUCTION

(30) Priorität: 19.03.2020 DE 102020107623
(43) Veröffentlichungstag der Anmeldung: 25.01.2023
(73) Patentinhaber: TRUMPF Werkzeugmaschinen SE + Co. KG, 71254 Ditzingen (DE)
(72) Erfinder: MESSERSCHMIDT, Claudius, 70565 Stuttgart (DE); SCHLEGEL, Rainer, 72469 Meßstetten (DE)
(74) Vertreter: Trumpf Patentabteilung
(86) Internationale Anmeldenummer: PCT/EP2021/056823
(87) Internationale Veröffentlichungsnummer: WO 2021/185909

(56) Entgegenhaltungen:
- WO-A1-2019/103010
- WO-A1-2020/204915
- US-A1- 2005 251 284

## Beschreibung

Die Erfindung betrifft ein Verfahren zum Erstellen von maschinennumerischen Steuerungsdatensätzen zur Ansteuerung von Werkzeugmaschinen. Ferner betrifft die Erfindung ein CAD-CAM-System sowie eine Fertigungsanlage und eine Werkzeugmaschine.

Für die Ansteuerung von Werkzeugmaschinen für beispielsweise die Metall- oder Blechbearbeitung wird mithilfe eines rechnerunterstützten Konstruktionssystems (computer-aided design (CAD)-System) ein digitales Konstruktionsmodell eines herzustellenden Bauteils erzeugt. Im Rahmen der rechnerunterstützten Fertigung (computer-aided manufacturing, CAM) wird aus dem Konstruktionsmodell ein maschinennumerischer Steuerungsdatensatz (computerized numerical control (CNC)-Code oder CNC-Programm) erstellt, der in elektronischer (digitaler) Form an die Steuerungseinheit einer Werkzeugmaschine, beispielsweise eine Laserschneidmaschine, eine Biegemaschine oder eine Maschine für die additive Fertigung, übergeben werden kann. Gemäß dem Steuerungsdatensatz werden an die verschiedenen Komponenten der Werkzeugmaschine Steuerungsroutinen zur Durchführung der Bearbeitung (Laserschneiden, Biegen, additives Fertigen) ausgegeben.

Die Erstellung des CNC-Programm kann mit einem sogenannten CAM-System erfolgen, in das die Geometriedaten (2D/3D Konstruktionsdaten) für das Bauteil eingelesen werden und das einen Zugriff auf die einzusetzende Technologie hat (d.h. deren Regelwerke und Prozess-Optimierungen sowie Maschinen-Einstellungen). Die Umwandlung eines CAD-Konstruktionsmodells (2D- oder 3D-Modells eines Bauteils) in einen (CAM-) Steuerungsdatensatz stellt eine rechnergestützte Programmierung dar, bei der nacheinander ablaufende Bearbeitungsschritte, Verfahrwege, Relativpositionen, Parameter der Werkzeugmaschine etc. eingehen. Das CAM-System kann ferner die Umwandlung in werkzeugmaschinenverständliche Steuerungsroutinen (z. B. G-Code) umfassen, wobei das CAM-System beispielsweise einen Postprozessor einsetzen kann, der auf eine spezielle Werkzeugmaschine ausgerichtet wurde. Alternativ kann die Umwandlung in die Steuerungsroutinen auch in einer Werkzeugmaschinensteuerung vorgenommen werden. Bei der rechnergestützten Programmierung und der Umwandlung kann das CAM-System auf Technologietabellen zurückgreifen, in denen beispielsweise die Betriebsparameter der Werkzeugmaschinen für verschiedene Bearbeitungsverfahren, Materialtypen, Werkzeugmaschinentypen, zur Verfügung stehende Werkzeuge etc. hinterlegt sind.

Der erzeugte Steuerungsdatensatz ist dazu vorgesehen, eine Werkzeugmaschine zur Durchführung von Bearbeitungsschritten anzusteuern. Dazu kann der Steuerungsdatensatz vom CAM-System oder von der Werkzeugmaschine in spezifische Maschinensteuerungsbefehle für die CNC-Ansteuerung umgesetzt werden. Bei einer derartigen CNC-Ansteuerung einer Werkzeugmaschine stellen die Maschinensteuerungsbefehle beispielsweise bei einer Laserschneidmaschine oder einer Maschine für die additive Fertigung die Parameter eines Laserstrahls einer Laserstrahlquelle ein, steuern eine Relativbewegung zwischen dem Laserstrahl und dem zu bearbeitende Material oder Pulverbett und aktivieren begleitende Prozesse wie die Versorgung mit Schutzgas und/oder oder vorausgehende/nachfolgende Prozesse wie das Beladen und Entladen von Transportvorrichtungen der Bauteile.

In einem CAD-CAM-System kann ein CAD-System mit einem CAM-System in einem Computersystem integriert sein, d. h., die Erstellung eines Bauteildatensatzes (CAD-Daten eines Bauteils) und die Programmierung eines Steuerungsdatensatzes (CNC-Programm) erfolgt in einem gemeinsamen Computersystem. Alternativ kann ein CAD-CAM-System dazu ausgebildet sein, bereits erstellte Bauteildatensätze einzulesen und diese mit einem CAM-Algorithmus (Steuerungsprogramm-Erzeugungssoftware) weiter zu verarbeiten. D. h., allgemein kann die Erzeugung von Steuerungsdatensätzen mit der Erstellung von Bauteildatensätzen in einer Datenverarbeitungseinheit kombiniert oder mithilfe von mehreren Datenverarbeitungseinheiten (beispielsweise als Cloud-System aufgesetzt) getrennt erfolgen werden.

Ein vom CAM-System im CAM-Steuerungsdatensatz vorgeschlagener Parameter der Bearbeitung kann bei Bedarf manuell angepasst werden. Eine Anpassung eines Parameters kann sich beispielsweise aus einer Kontrollsimulation einer Bearbeitung gemäß einem CAM-Steuerungsdatensatz ergeben. Ferner kann sich eine Anpassung des CAM-Steuerungsdatensatzes im Rahmen der Ausführung des NC-Codes auf der Werkzeugmaschine als notwendig erweisen, wenn beispielsweise in einem ersten Arbeitsablauf gemäß dem CAM-Steuerungsdatensatz Fehler aufgetreten sind oder die gewünschte Qualität nicht erreicht wurde.

Üblicherweise wird die Konstruktion und Programmierung eines Bauteils oder einer Baugruppe von Bauteilen von einem Konstrukteur/Maschinenprogrammierer manuell durchgeführt und an die jeweiligen Gegebenheiten angepasst. Hierbei benötigt der Konstrukteur/ Maschinenprogrammierer viel Fachwissen zur Konstruktion, den Materialien, den zur Verfügung stehenden Bearbeitungsmethoden sowie zu den zur Verfügung stehenden Werkzeugmaschinen. Ziel der Erfindung ist es, diesen Prozess ganzheitlich zu automatisieren.

Eine beispielhafte Vorrichtung zur Steuerung einer Bearbeitungsanlage ist aus der EP 2 340 469 A1 bekannt, bei der eine Anpassvorrichtung vorgesehen ist, mit der Bearbeitungsparameter in einer voreingestellten Weise an die Materialeigenschaften eines zu bearbeitenden Werkstücks angepasst werden können. Bei der Bearbeitung von Werkstücken ist die Verwendung von Algorithmen, die insbesondere auf maschinellem Lernen - beispielsweise auf neuronalen Netzwerken - basieren, zum Beispiel aus US 2005/251284 A1, JP 7080746 A, US 6,018,729 und US 8,706,282 bekannt.

Einem Aspekt dieser Offenbarung liegt die Aufgabe zugrunde, eine rechnergestützte Erzeugung von (CAM-)Steuerungsdatensätzen zu verbessern und diese insbesondere auf spezifische Umfelder bei der Nutzung individueller Werkzeugmaschinen auszurichten. So soll insbesondere eine stabile, prozesssichere Anwendung von Werkzeugmaschinen bei der Produktion von Bauteilen gewährleistet werden. Dabei sind insbesondere auch kundenspezifische Präferenzen zu berücksichtigen.

Einem weiteren Aspekt dieser Offenbarung liegt die Aufgabe zugrunde, eine automatische Generierung und Optimierung von Prozessdaten und CNC-Programmen zur autonomen Bearbeitung von Blechteilen auf Blechfertigungszellen/Blechfertigungsmaschinen zu ermöglichen. So erfolgt eine gezielte Anpassung von Prozessdaten und CNC-Programmen mit dem Ziel, Bearbeitungsprogramme schneller, qualitativer und/oder sicherer zu machen, um allgemein erfolgreicher produzieren zu können. In diesem Zusammenhang sollen Prozessdaten und CNC- Programme automatisch für die individuellen Anforderungen eines Kunden oder einer Zielgruppe optimiert bzw. zumindest verbessert werden.

Zumindest eine dieser Aufgaben wird gelöst durch ein computerimplementiertes Verfahren nach Anspruch 1, durch ein CAD-CAM-System nach Anspruch 12, durch eine Fertigungsanlage nach Anspruch 13 und durch eine Werkzeugmaschine nach Anspruch 15. Weiterbildungen sind in den Unteransprüchen angegeben.

Ein Aspekt dieser Offenbarung ist ein computerimplementiertes Verfahren, das von einem oder mehreren Computern ausgeführt wird, und zum Erstellen von maschinennumerischen Steuerungsdatensätzen zur Ansteuerung von Werkzeugmaschinen in einem Nutzungsumfeld vorgesehen ist. Dabei werden die Steuerungsdatensätze von zugehörigen Werkzeugmaschinen für die Bearbeitung von Ausgangsmaterialien, insbesondere für die Bearbeitung von Metall- oder Blechteilen mit Trenn-, Form- und/oder Fügefertigungsverfahren, eingelesen. Das Verfahren umfasst die Schritte:
- Empfangen eines ersten Bauteildatensatzes, der ein digitales Konstruktionsmodell eines ersten Bauteils darstellt;
- Erstellen eines ersten maschinennumerischen Steuerungsdatensatzes für den ersten Bauteildatensatz unter Verwendung einer Steuerungsprogramm-Erzeugungssoftware, wobei die Steuerungsprogramm-Erzeugungssoftware eine Bewertungsroutine umfasst, die einen trainierten Algorithmus zum maschinellen Lernen mit einstellbaren Parametern einsetzt, wobei Anfangswerte der einstellbaren Parameter durch ein Training eines Trainingsalgorithmus zum maschinellen Lernen bestimmt wurden, der dem trainierten Algorithmus zum maschinellen Lernen entspricht;
- Zusammenstellen eines ersten Zusatztrainingsdatensatzes aus dem ersten Bauteildatensatz und dem erstellten maschinennumerischen Steuerungsdatensatz und Ausgeben des ersten Zusatztrainingsdatensatzes an eine Nutzungsumfeld-spezifische Trainingsdatenbank;
- Aktualisieren des Algorithmus zum maschinellen Lernen durch Einstellen von Nutzungsumfeld-spezifischen Werten für die einstellbaren Parameter, wobei die Nutzungsumfeld-spezifischen Werte durch ein Training des Trainingsalgorithmus zum maschinellen Lernen mit der Nutzungsumfeld-spezifischen Trainingsdatenbank bestimmt wurden;
- Empfangen eines zweiten Bauteildatensatzes, der ein digitales Konstruktionsmodell eines zweiten Bauteils darstellt; und
- Erstellen eines zweiten maschinennumerischen Steuerungsdatensatzes für den zweiten Bauteildatensatz unter Verwendung der Steuerungsprogramm-Erzeugungssoftware und Durchlaufen der Bewertungsroutine, wobei der hinsichtlich der einstellbaren Parameter aktualisierte Algorithmus zum maschinellen Lernen eingesetzt wird.

Ein weiterer Aspekt der Offenbarung ist ein CAD-CAM-System zum Erstellen oder Empfangen von Bauteildatensätzen, die jeweils ein digitales Konstruktionsmodell eines Bauteils darstellen, und zum Erstellen von maschinennumerischen Steuerungsdatensätzen für die Bauteildatensätze, wobei die Steuerungsdatensätze von zugehörigen Werkzeugmaschinen für die Bearbeitung von Ausgangsmaterialien, insbesondere für die Bearbeitung von Metall- oder Blechteilen mit Trenn-, Form- und/oder Fügefertigungsverfahren, einlesbar sind. Das CAD-CAM-System ist ausgestattet mit:
- mindestens einem computerlesbaren Speichermedium zum Abspeichern der Bauteildatensätze und der Steuerungsdatensätze;
- einem Prozessor (z.B. verbunden mit dem computerlesbaren Speichermedium zum Lesen von Bauteildatensätzen, die auf dem Speichermedium gespeichert sind), der eine Steuerungsprogramm-Erzeugungssoftware mit einem trainierten Algorithmus zum maschinellen Lernen in seinen Arbeitsspeicher geladen hat, wobei der trainierte Algorithmus zum maschinellen Lernen in einer Bewertungsroutine der Steuerungsprogramm-Erzeugungssoftware eingesetzt wird, mit einstellbaren Parametern konfiguriert ist und dazu eingerichtet ist, dass der Prozessor das Verfahren nach einem der vorhergehenden Ansprüche ausführt und maschinennumerische Steuerungsdatensätze zur Ansteuerung von mindestens einer Werkzeugmaschine erstellt (und auf dem Speichermedium ablegt);
- einem Dateneingang (z.B. verbunden mit dem Prozessor) zum Empfangen von Nutzungsumfeld-spezifischen Werten für die einstellbaren Parameter des trainierten Algorithmus zum maschinellen Lernen;
- einem Steuerungsdatenausgang (z.B. verbunden mit dem Prozessor) zur Ausgabe der erstellten maschinennumerischen Steuerungsdatensätze an die mindestens eine Werkzeugmaschine und
- mindestens einem Trainingsdatenausgang (z.B. verbunden mit dem Prozessor) zur Ausgabe von Zusatztrainingsdatensätzen, die dem Nutzungsumfeld zugeordnet sind und bei der Durchführung des hierin beschrieben Verfahrens ausgegeben werden.

Ein weiterer Aspekt der Offenbarung ist eine Fertigungsanlage für die Fertigung von Bauteilen gemäß Bauteildatensätzen, die jeweils ein digitales Konstruktionsmodell eines Bauteils darstellen. Die Fertigungsanlage ist insbesondere für die Bearbeitung von Metall- oder Blechteilen mit Trenn-, Form- und/oder Fügefertigungsverfahren eingerichtet. Die Fertigungsanlage umfasst:
- ein hierin beschriebenes CAD-CAM-System zum Erstellen von maschinennumerischen Steuerungsdatensätzen für die Bauteildatensätze; und
- eine Werkzeugmaschine mit einer numerischen Maschinensteuerung und einer Bearbeitungseinheit, wobei die Werkzeugmaschine in einem spezifischen Nutzungsumfeld eingesetzt wird und die numerische Maschinensteuerung die vom CAD-CAM-System erstellten maschinennumerischen Steuerungsdatensätze empfängt (z.B. an einem Steuerungsdateneingang) und in Steuerungsroutinen umwandelt, mit denen die Bearbeitungseinheit zur Bearbeitung eines Werkstücks für der Herstellung von Bauteilen angesteuert wird.

Ein weiterer Aspekt der Offenbarung ist eine Werkzeugmaschine mit einer numerischen Maschinensteuerung und einer Bearbeitungseinheit, wobei die Werkzeugmaschine in einem spezifischen Nutzungsumfeld eingesetzt wird und die numerische Maschinensteuerung maschinennumerischen Steuerungsdatensätze empfängt (z.B. an einem Steuerungsdateneingang) und in Steuerungsroutinen umwandelt, mit denen die Bearbeitungseinheit zur Bearbeitung eines Werkstücks, insbesondere zur Bearbeitung von Metall- oder Blechteilen mit Trenn-, Form- und/oder Fügefertigungsverfahren, angesteuert wird. Die Werkzeugmaschine umfasst:
- ein computerlesbares Speichermedium zum Abspeichern der Steuerungsdatensätze und von den Steuerungsdatensätzen zugrundeliegenden Bauteildatensätzen;
- einen Prozessor (z.B. verbunden mit dem computerlesbaren Speichermedium zum Lesen von Steuerungsdatensätzen, die auf dem Speichermedium gespeichert sind), der so eingerichtet ist, dass er aus den Steuerungsdatensätzen die Steuerungsroutinen erzeugt, wobei ein maschinennumerischer Steuerungsdatensatz von einem vom Prozessor geladenen trainierten Algorithmus zum maschinellen Lernen in einen geänderten Steuerungsdatensatz abgeändert werden kann, aus dem die Steuerungsroutinen erzeugt werden, und wobei der Prozessor ferner so eingerichtet ist, dass er einen Zusatztrainingsdatensatz aus dem geänderten Steuerungsdatensatz und dem zugehörigen Bauteildatensatz zusammenstellt, der dem Nutzungsumfeld zugeordnet ist;
- einen Trainingsdatenausgang (z.B. verbunden mit dem Prozessor) zur Ausgabe des Zusatztrainingsdatensatzes an eine Nutzungsumfeld-spezifische Trainingsdatenbank; und
- einen Parametereingang (z.B. verbunden mit dem Prozessor) zum Empfangen von Nutzungsumfeld-spezifischen Werten für einstellbare Parameter des trainierten Algorithmus zum maschinellen Lernen;
- wobei der Prozessor ferner so eingerichtet ist, dass er ein Aktualisieren des Algorithmus (11) zum maschinellen Lernen durch Einstellen von Nutzungsumfeld-spezifischen Werten für die einstellbaren Parameter (Pi) ausführt, wobei die Nutzungsumfeld-spezifischen Werte durch ein Training eines Trainingsalgorithmus (111) zum maschinellen Lernen mit der Nutzungsumfeld-spezifischen Trainingsdatenbank (119) bestimmt wurden.

In einigen Ausführungsformen umfasst die Fertigungsanlage ferner ein Trainingscomputersystem zum Bestimmen von Werten für einstellbare Parameter eines Algorithmus zum maschinellen Lernen, der in einer Bewertungsroutine einer Steuerungsprogramm-Erzeugungssoftware im CAD-CAM-System eingesetzt wird. Das Trainingscomputersystem umfasst:
- eine computerlesbare Nutzungsumfeld-spezifische Trainingsdatenbank zum Abspeichern von Zusatztrainingsdatensätzen, wobei die Zusatztrainingsdatensätze ausgegeben werden vom CAD-CAM-System, insbesondere von einem CAD-System oder einem CAM-System des CAD-CAM-Systems, und optional von der numerischen Maschinensteuerung,
- einen Prozessor, der einen Trainingsalgorithmus zum maschinellen Lernen, der dem im CAD-CAM-System eingesetzten trainierten Algorithmus zum maschinellen Lernen entspricht, geladen hat und der so eingerichtet ist, dass er den Trainingsalgorithmus zum maschinellen Lernen basierend auf der Nutzungsumfeld-spezifischen Trainingsdatenbank trainiert und Werte für die Parameter an das CAD-CAM-System für die Verwendung in dem im CAD-CAM-System eingesetzten trainierten Algorithmus zum maschinellen Lernen ausgibt.

In einigen Ausführungsformen umfasst das computerimplementierte Verfahren ferner die Schritte:
- Anpassen des ersten maschinennumerischen Steuerungsdatensatzes durch einen Maschinenprogrammierer zum Erstellen eines angepassten ersten maschinennumerischen Steuerungsdatensatz;
- Zusammenstellen eines weiteren Zusatztrainingsdatensatzes aus dem angepassten maschinennumerischen Steuerungsdatensatz und dem ersten Bauteildatensatz und Ausgeben des weiteren Zusatztrainingsdatensatzes für eine Erweiterung der Nutzungsumfeld-spezifischen Trainingsdatenbank; und
- Aktualisieren des Algorithmus zum maschinellen Lernen durch Einstellen von Nutzungsumfeld-spezifischen Werten für die Parameter, wobei die Nutzungsumfeld-spezifischen Werte durch ein Training des Trainingsalgorithmus zum maschinellen Lernen auf der um den weiteren Zusatztrainingsdatensatz erweiterten Nutzungsumfeld-spezifischen Trainingsdatenbank bestimmt wurden.

In einigen Ausführungsformen umfasst das computerimplementierte Verfahren ferner die Schritte:
- Anpassen des zweiten maschinennumerischen Steuerungsdatensatzes durch einen Maschinenprogrammierer zum Erstellen eines angepassten zweiten maschinennumerischen Steuerungsdatensatzes;
- Zusammenstellen eines weiteren Zusatztrainingsdatensatzes aus dem angepassten maschinennumerischen Steuerungsdatensatz und dem zweiten Bauteildatensatz und Ausgeben des weiteren Zusatztrainingsdatensatzes für eine Erweiterung der Nutzungsumfeld-spezifischen Trainingsdatenbank; und
- Aktualisieren des Algorithmus zum maschinellen Lernen durch Einstellen von Nutzungsumfeld-spezifischen Werten für die Parameter, wobei die Nutzungsumfeld-spezifischen Werte durch ein Training des Trainingsalgorithmus zum maschinellen Lernen auf der um den weiteren Zusatztrainingsdatensatz erweiterten Nutzungsumfeld-spezifischen Trainingsdatenbank bestimmt wurden.

Der zweite maschinennumerische Steuerungsdatensatz kann angepasst werden
- von einem Konstrukteur durch modifizieren des zweiten Bauteildatensatzes;
- von einem Maschinenprogrammierer nach Simulieren der Ansteuerung der Werkzeugmaschinemit einem Simulationsprogramm der Fertigung des Bauteils, wobei das Simulationsprogramm die Fertigung mit dem zweiten maschinennumerischen Steuerungsdatensatz simuliert; und/oder
- von einem Werkzeugmaschinenbediener nach Einlesen des zweiten maschinennumerischen Steuerungsdatensatzes in eine numerische Maschinensteuerung der Werkzeugmaschine und Umwandeln des zweiten maschinennumerischen Steuerungsdatensatzes in eine Mehrzahl von Steuerungsroutinen, insbesondere nach einer Bearbeitung eines Ausgangsmaterials mit einer Bearbeitungseinheit der Werkzeugmaschine durch Ansteuern der Bearbeitungseinheit mit den Steuerungsroutinen.

In einigen Ausführungsformen umfasst das computerimplementierte Verfahren ferner die Schritte:
- Durchführen eines Trainings eines dem trainierten Algorithmus zum maschinellen Lernen entsprechenden Trainingsalgorithmus zum maschinellen Lernen auf der Nutzungsumfeld-spezifischen Trainingsdatenbank zur Erzeugung der Nutzungsumfeld-spezifischen Werte der Parameter; und
- Übermitteln der Nutzungsumfeld-spezifischen Werte der Parameter an die Steuerungsprogramm-Erzeugungssoftware zur Aktualisierung des Algorithmus zum maschinellen Lernen mit den Nutzungsumfeld-spezifischen Werten der Parameter.

In einigen Ausführungsformen des computerimplementierten Verfahrens kann in der Nutzungsumfeld-spezifische Trainingsdatenbank abgelegt werden:
- mindestens ein Zusatztrainingsdatensatz, der auf einen maschinennumerischen Steuerungsdatensatz zurückgeht, der im Nutzungsumfeld erstellt wurde, und
- optional ein oder mehrere Trainingsdatensätze, die unabhängig vom Nutzungsumfeld und insbesondere von einem Hersteller der Werkzeugmaschine bereitgestellt wurden.

In einigen Ausführungsformen des computerimplementierten Verfahrens kann in die Zusatztrainingsdatensätze aufgenommen werden:
- mindestens eine geometrische Definition eines Abschnitts des Bauteils, und
- mindestens einen Fertigungsprozessparameter, der eine Bearbeitung mit der Werkzeugmaschine definiert, der dem Abschnitt zugeordnet ist.

In einigen Ausführungsformen des computerimplementierten Verfahrens kann in die Zusatztrainingsdatensätze aufgenommen werden:
- Maschinenparameter, die der Werkzeugmaschine zugeordnet sind,
- Nutzerparameter, die einem Nutzer der Werkzeugmaschine zugeordnet sind, und
- Prozessablaufparameter, die dem Ablauf eines Bearbeitungsprozesses zugeordnet sind.

In einigen Ausführungsformen des computerimplementierten Verfahrens können in die Zusatztrainingsdatensätze Daten aus einem oder mehreren der folgenden Einsatzgebiete und Steuerungsrahmenbedingungen aufgenommen werden:
- Zielgruppen-Identifikation, insbesondere Daten zum Kunden;
- Bearbeitungsprofile, insbesondere kundenspezifischen Bearbeitungsprofile, mit Parametern, die einen Bearbeitungsvorgang auf ein Bearbeitungsprofil abbilden, beispielsweise auf ein kundenspezifisches Bearbeitungsprofil;
- autonome Funktionen einer Werkzeugmaschine mit Parametern, die von einer Werkzeugmaschine eigenständig berücksichtigt werden, wie eine Anfahrfahne, eine Konturgröße, ein Spritzkreis, eine Schnittreihenfolge, ein Messpunkt, ein Messzyklus und/oder ein Werkzeugwechsel;
- Auswahl einer passenden Technologietabellen wie einer Laser-Technologietabelle und/oder eines Regelwerks;
- optimale Maschinenauswahl;
- Schneidzeit;
- Produktionskosten.

In einigen Ausführungsformen des computerimplementierten Verfahrens kann der Algorithmus zum maschinellen Lernen als neuronales Netzwerk ausgebildet sein und eine Mehrzahl von neuronalen Kernnetzschichten enthalten, die jeweils durch einen Satz von Parametern als Gewichte definiert sind, und wobei im Verfahren der Schritt des Aktualisierens umfasst:
- Aktualisieren des neuronalen Netzwerks durch Zuordnen von Nutzungsumfeld-spezifischen Werten zu den Parametern, wobei die Nutzungsumfeld-spezifischen Werte basierend auf der Nutzungsumfeld-spezifischen Trainingsdatenbank bestimmt wurden.

In einigen Ausführungsformen des computerimplementierten Verfahrens kann der Algorithmus zum maschinellen Lernen als evolutionärer Algorithmus, Support-Vector-Machine-Algorithmus oder als Algorithmus zur automatischen Induktion eines Entscheidungsbaums ausgebildet sein, das ein Modell umfasst, in das die Parametern eingehen, und wobei im Verfahren der Schritt des Aktualisierens umfasst:
- Aktualisieren des evolutionären Algorithmus, des Support-Vector-Machine-Algorithmus oder des Algorithmus zur automatischen Induktion eines Entscheidungsbaums durch Zuordnen von Nutzungsumfeld-spezifischen Werten zu den Parametern, wobei die Nutzungsumfeld-spezifischen Werte basierend auf der Nutzungsumfeld-spezifischen Trainingsdatenbank bestimmt wurden.

Die hierin offenbarten CAD-CAM-Systeme, Fertigungsanlagen und Werkzeugmaschinen sind insbesondere derart ausgestaltet, dass mit ihnen Ausführungsformen des hierin offenbarten erfindungsgemäßen Verfahrens durchgeführt werden können. Das Verfahren sowie optional die Ausführungsformen des Verfahrens können durch ein Computerprogramm ausgeführt werden, welches in einem Prozessor abgearbeitet wird. Der Prozessor kann dabei zum Beispiel Teil des CAD-CAM-Systems, des CAM-Systems, der Fertigungsanlage und/oder der Werkzeugmaschine sein. Weiterhin kann das Computerprogramm auf einem computerlesbaren Datenträger gespeichert sein.

Die hierin vorgeschlagenen Konzepte ermöglichen es dem Ablauf bei der Bearbeitung und der Herstellung von Bauteilen, insbesondere die Herstellung von maschinennumerischen Steuerungsdatensätzen, mithilfe von Algorithmen des maschinellen Lernens (ML-Algorithmen) an spezifische Nutzungsumfelder anzupassen. Auf diese Weise kann die Produktionsleistung in Fertigungsanlagen gesteigert werden.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig.1: eine schematische Darstellung einer Fertigungsanlagen im Wechselspiel mit einer rechnergestützten Optimierung eines Algorithmus,
- Fig. 2: eine schematische Ansicht zur Verdeutlichung des Datenflusses im Rahmen der Anwendung des ML-Algorithmus,
- Fig. 3: ein Flussdiagramm zur Verdeutlichung des Ablaufs eines Verfahrens zum Erstellen von maschinennumerischen Steuerungsdatensätzen zur Ansteuerung von Werkzeugmaschinen in einem spezifischen Nutzungsumfeld und
- Fig. 4: verschiedene Schritte einer Implementierung der hierin vorgestellten Konzepte.

Hierin beschriebene Aspekte basieren zum Teil auf der Erkenntnis, dass eine vom Werkzeugmaschinenhersteller für eine Mehrzahl an Anwendungsfällen trainierte künstliche Intelligenz (hier ein Algorithmus zum maschinellen Lernen im Bereich der Erstellung von maschinennumerischen Steuerungsdatensätzen) in der Anwendung beim Kunden, d. h. bei einem Einsatz einer Werkzeugmaschine in einem spezifischen Nutzungsumfeld des Kunden, "weiterlernen" kann, wodurch für die Anwendungszwecke eines spezifischen Kunden die Erstellung von Steuerungsdatensätzen optimiert bzw. zumindest verbessert werden kann.

Insbesondere haben die Erfinder erkannt, dass eine Anpassung des Algorithmus zum maschinellen Lernen basierend auf unterschiedlichen Kundenanforderungen (bevorzugt mit eigenen kundenspezifischen Parametern/Gewichten im ML-Algorithmus) möglich ist, wenn ein entsprechender Datenkreislauf in das Trainingsumfeld des ML-Algorithmus eingebunden wird. Neben der Bauteil-spezifischen Bearbeitung (beim Laserschneiden z.B. ein Vorsehen von Microjoints) können Aspekte der Durchführung der Bearbeitung in einem spezifischen Nutzungsumfeld, wie der Materialfluss, das Zeitmanagement und allgemein die zugrunde liegenden Fertigungsbedingungen und Logistikanforderungen, mit den hierin vorgeschlagenen Konzepten in das Training des Algorithmus zum maschinellen Lernen einfließen.

So schlagen die Erfinder unter anderem vor, eine vom Werkzeugmaschinenbauer für eine Mehrzahl an Anwendungsfällen angelernte KI (ML-Algorithmus) bei den verschiedenen Kunden individuell weiterlernen zu lassen, um so die KI für die Anwendungszwecke des jeweiligen Kunden individuell zu optimieren. Insbesondere schlagen die Erfinder vor, eine Wissensdatenbank aufzubauen, indem in einem iterativen Feedbackkreislauf zwischen CAD-System, CAM-System und/oder der Maschinensteuerung mit dem Training des ML-Algorithmus Trainingsdatensätze gebildet, ausgegeben und in die Wissensdatenbank aufgenommen werden.

Werden die Daten der Wissensdatenbank, d. h. die Trainingsdatensätze, dazu verwendet, um KI-Modelle (ML-Algorithmen) des CAM-Systems zu trainieren, können die Gewichte der KI-Modelle mit der Zeit an die individuellen Kundenbedürfnisse angepasst werden. Auf diese Weise werden technische, geometrische und produktspezifische Muster des Nutzungsumfelds vom KI-Modell erlernt, bzw. fließen in dieses ein, sodass letztendlich automatisch erstellte Steuerungsprogramme schneller, mit höherer Qualität und/oder sicherer (fehlerfreier) produziert werden können.

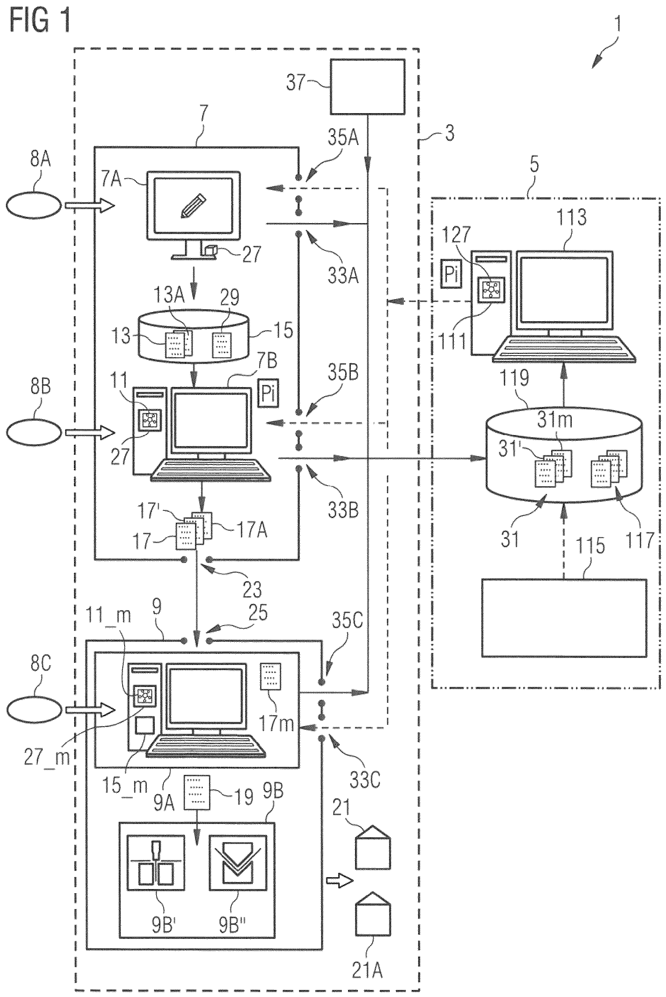

Nachfolgend wird unter Bezugnahme auf die Fig. 1 erläutert, wie mithilfe eines derartigen Feedbackkreislaufs beispielsweise bei der Blechbearbeitung (Trennen, Formen, und Fügen) das Ziel einer bevorzugt komplett autonomen Erstellung von Steuerungsprogrammen angegangen werden kann.

Fig. 1 zeigt eine Fertigungsanlage 1 für die Fertigung von Bauteilen. Zur Verdeutlichung der hierin vorgeschlagenen Konzepte ist die Fertigungsanlage in ein Nutzungsumfeld 3 und in ein ML- Trainingsumfeld 5 unterteilt. Das Nutzungsumfeld 3 betrifft den Fertigungsprozess von Bauteilen. Der Fertigungsprozess kann beispielsweise mit einem CAD-CAM-System 7 und einer Werkzeugmaschine 9 (oder mehreren Werkzeugmaschinen) umgesetzt werden. In den verschiedenen Teilschritten der Fertigung wird mindestens ein ML-Algorithmus 11 eingesetzt. Die Verwendung des ML-Algorithmus 11 erfordert allgemein ein Training des ML-Algorithmus. Dieses wird im ML-Trainingsumfeld 5 vorgenommen, d. h., ein ML-Algorithmus, der dem ML-Algorithmus 11 im CAD-CAM-System 7 entspricht, durchläuft eine Trainingsphase basierend auf einer Vielzahl von Trainingsdatensätzen, mit denen Parameter des ML-Algorithmus angepasst werden.

Ein zentraler hierin vorgeschlagener Punkt betrifft das Wechselspiel zwischen dem Trainieren des verwendeten ML-Algorithmus und der Implementierung des ML-Algorithmus im CAD-CAM-System 7 und/oder der Werkzeugmaschine 9.

Nachfolgend wird das Nutzungsumfeld 3 am Beispiel der Metall- und Blechbearbeitung beschrieben. Bei der Metall- und Blechbearbeitung werden im CAD-CAM-System 7 Bauteile konstruiert. Zum Beispiel werden Bauteildatensätze 13 mit einem CAD-System 7A von einem Konstrukteur 8A erstellt und beispielsweise in einem Speichermedium 15 abgelegt. Alternativ kann ein derartiger Bauteildatensatz 13 in das (CAD-) CAM-System 7A importiert werden, wenn eine entsprechende Konstruktion bereits extern erfolgt ist.

Um ein zum Bauteildatensatz 13 gehörendes Bauteil 21 zu produzieren, muss für den Bauteildatensatz 13 ein Steuerungsdatensatz 17 erzeugt werden. Dies erfolgt mithilfe eines CAM-Systems 7B, dass eine Schnittstelle zwischen der Konstruktion und der Fertigung mit der Werkzeugmaschine 9 darstellt und der "Programmierung" des Bauteils, genauer der Bearbeitung eines Werkstücks zur Ausbildung des Bauteils, dient.

Im Beispiel der Fig. 1 erzeugt das CAM-System 7B einen Steuerungsdatensatz 17, der auf eine Maschinensteuerung 9A der einzusetzenden Werkzeugmaschine 9 übertragen wird. Die Maschinensteuerung 9A gibt gemäß dem Steuerungsdatensatz 17 Steuerungsroutinen 19 an eine Bearbeitungseinheit 9B der Werkzeugmaschine 9 ab. Beispiele für Werkzeugmaschinen umfassen - für die Blechbearbeitung - Lasermaschine (Schneiden, Schweißen, Roboter, Flachbett, Rohrschneiden etc.), Stanzmaschine und Biegemaschine. Ein weiteres Beispiel sind Maschinen für die additive Fertigung, insbesondere Maschinen die auf Laser-Metall-Fusion (LMF), Elektronenstrahlschmelzen oder selektiven Lasersintern (SLS) basieren, sowie Werkzeugmaschinen zum Tiefziehen. In Fig. 1 sind beispielhaft eine Laserschneidmaschine 9A' und eine Biegemaschine 9B", angedeutet. Die Steuerungsroutinen 19 bewirken eine Durchführung der entsprechenden Bearbeitung eines Werkstücks und insbesondere die Erzeugung des durch den Bauteildatensatz 13 definierten Bauteils 21. Die Steuerungsroutinen 19 definieren die jeweils einzustellenden Fertigungsparameter wie Stanzwerkzeuge, Hubkraft, Laserleistung, Laserwellenlänge, Bewegungstrajektorien, Materialparameter etc.

Zur Verdeutlichung des Datenflusses ist in Fig. 1 beispielhaft ein Steuerungsdatenausgang 23 des CAD-CAM-Systems 7 und ein Steuerungsdateneingang 25 der Werkzeugmaschine 9 für den Austausch von Steuerungsdatensätzen 17 angedeutet. Wie bereits erwähnt kann alternativ die Erzeugung von Steuerungsroutinen bereits im CAM-System 7B stattfinden, sodass diese an die Maschinensteuerung 9A oder direkt an die Bearbeitungseinheit 9B übertragen werden können.

Im Rahmen von CAD-CAM-Anwendungen (Softwarelösungen zur Konstruktion von Bauteilen und Programmierung von CNC-Steuerungsprogrammen, die beispielsweise auf einem oder mehreren Prozessoren 27 ablaufen) kann ein ML-Algorithmus eingesetzt werden, um für eine Bauteilgeometrie einen Vorschlag für einen Steuerungsdatensatz zu erstellen. In Fig. 1 ist dies der ML-Algorithmus 11, der auf dem Prozessor 27 des CAM-Systems 7B abläuft. Ein zugehöriges CAD-Konstruktionsmodell (in Fig. 1 der Bauteildatensatz 13) und Fertigungsprozessparameter stellen die Eingangsparameter für den ML-Algorithmus 11 dar. Fertigungsprozessparameter 29 sind in Fig. 1 für die Werkzeugmaschine 9 beispielhaft auf dem Speichermedium 15 abgelegt. Der ML-Algorithmus 11 erstellt daraus einen CAM-Steuerungsdatensatz, in Fig. 1 den Steuerungsdatensatz 17 für den Bauteildatensatz 13 zur Erzeugung des Bauteils 21. Allgemein erlaubt es ein ML-Algorithmus für ein herzustellendes Bauteil (CAD-Konstruktionsmodell) einen Steuerungsdatensatz zu erzeugen. Somit liegen im CAM-System 7B CAD-Konstruktionsmodelle in Bezug zu den für die Fertigung der entsprechenden Bauteile abgeleiteten CAM-Steuerungsdatensätzen vor.

Um einen ML-Algorithmus bei der Programmierung von Steuerungsdatensätzen einsetzen zu können, wird ein Maschinenhersteller Parameter für den ML-Algorithmus mithilfe von Trainingsdaten näher bestimmen. Dies wird in Fig. 1 anhand des Trainingsumfelds 5 verdeutlicht. Das ML-Trainingsumfeld 5 stellt die Umgebung dar, in der der ML-Algorithmus trainiert werden kann. Üblicherweise erfolgt das Training auf einem Trainings-ML-Algorithmus 111, der dem ML-Algorithmus 11 in der CAD-CAM-Software entspricht. Das dem Trainings-ML-AIgorithmus 111 zugrundeliegende Modell entspricht dem des ML-Algorithmus 11, allerdings muss das Modell erst mit Trainingsdaten trainiert und an die Anwendung angepasst werden. Der Trainings-ML-Algorithmus 111 ist auf einem Trainingscomputersystem 113 installiert, das die benötigte Rechenleistung bereitstellt und Parameter des Trainings-ML-Algorithmus 111 einstellen kann. Der Trainings-ML-Algorithmus 111 wird für eine Vielzahl von Eingangsparametern durchlaufen und die erzeugten Steuerungsdatensätzen werden mit Soll-Steuerungsdatensätzen abgeglichen. Basierend darauf werden die Parameter des Trainings-ML-Algorithmus 111 angepasst. Die Güte des ML-Algorithmus kann mithilfe eines Tests und eines Validierungsdatensatzes gemessen werden. Ein derartiges (erstes) Training des ML-Algorithmus stellt einen beispielhaften Ausgangspunkt für das hierin vorgeschlagene Nutzungsumfeld-bezogene "Weiterlernen" des ML-Algorithmus dar.

Für das erste Training des ML-Algorithmus führt der Maschinenhersteller eine große Anzahl von Bearbeitungsabläufen (basierend auf Steuerungsdatensätzen) zur Erzeugung von Test-Bauteilgeometrien durch (in Fig. 1 als Trainingsherstellungsvorgänge 115 angedeutet). Darauf basierend erstellt der Maschinenhersteller Herstellertrainingsdatensätze 117, in denen jeweils eine programmierte Bearbeitung (CNC-Programm) einer Bauteilgeometrie (Bauteildatensatz) zugeordnet ist. Mithilfe der Herstellertrainingsdatensätze 117 können Einstellungen (Werte für die Parameter Pi) des Trainings-ML-Algorithmus spezifiziert werden. Die Herstellertrainingsdatensätze 117 bilden den Anfang einer Wissensdatenbank, die vorerst noch auf das Umfeld des Herstellers beschränkt ist. Die Herstellertrainingsdatensätze 117 werden auf einer Trainingsdatenbank 119 abgelegt. Das Trainingscomputersystem 113 kann auf die Trainingsdatenbank 119 zugreifen und die Parameter Pi unter Verwendung der Herstellertrainingsdatensätze 117 optimieren.

Parameter Pi eines auf diese Weise trainierten ML-Algorithmus können im CAD-CAM-System 7 für den ML-Algorithmus 11 verwendet werden, um für ein neu geplantes Bauteil (neuer Bauteildatensatz 13) automatisiert einen Vorschlag für ein CNC-Programm (Steuerungsdatensatz 17) zu generieren. Dazu werden beispielsweise die Werte der Parameter Pi an das CAD-System 7B übermittelt und von diesem in dem ML-Algorithmus 11 abgelegt.

Nachteilig bei der zuvor beschriebenen Verwendung eines ML-Algorithmus mit Parametern, die vom Maschinenhersteller bereitgestellt wurden, ist der Aspekt, dass die dem Training zugrundeliegenden Bauteilgeometrien und CAM-Steuerungsdatensätze für Umfeldbedingungen gegeben sind, wie sie beim Maschinenhersteller, d. h. bei den Trainingsherstellungsvorgängen 115, vorliegen. Diese können sich wesentlich von den Nutzungsbedingungen bei einem Kunden, wie sie im Nutzungsumfeld 3 vorliegen, unterscheiden.

Erfindungsgemäß wird hierin vorgeschlagen, die Trainingsdatenbank 119 mithilfe von Zusatztrainingsdatensätzen 31 zu erweitern. Die Zusatztrainingsdatensätze 31 basieren auf Steuerungsdatensätzen, wie sie vom CAD-CAM-System 7 erstellt werden. Dabei können diese CAD-CAM-System-basierten Zusatztrainingsdatensätzen 31 sowohl auf einem rein automatisch mithilfe des ML-Algorithmus 11 erzeugten Steuerungsdatensatz 17 als auch auf einem zuerst automatisch erstellten und anschließend von einem Maschinenprogrammierer 8B angepassten Steuerungsdatensatz 17' basieren. Allgemein können die Zusatztrainingsdatensätze 31 Modifikationen des Konstrukteurs 8A am Bauteildatensatz 13 sowie des Maschinenprogrammierers 8B und auch eines Werkzeugmaschinenbedieners 8C am Steuerungsdatensatz 17 oder der finalen Steuerungsroutinen 19 berücksichtigen. Ferner können die Zusatztrainingsdatensätze 31 Modifikationen am Bauteildatensatz und/oder am Steuerungsdatensatz berücksichtigen, die bei der Konstruktion, der Programmierung des Steuerungsdatensatzes oder der Ansteuerung der Werkzeugmaschine basierend auf einem ML-Algorithmus vorgenommen wurden. Neben den Bauteildaten und den Steuerungsdaten können die Zusatztrainingsdatensätze verschiedenste Informationen umfassen, wie sie im Rahmen der Konstruktion, der Programmierung, der Fertigung, des Auftraggebers und Auftragnehmers in die Bearbeitung eingehen können.

Im Rahmen der Konstruktion umfassen die Zusatztrainingsdatensätze geometrische Definitionen des Bauteils, die üblicherweise das Bauteil in Abschnitte untergliedern. Eine geometrische Definition kann Form und Größe einer zugrundeliegenden Kontur betreffen, z.B. gegeben durch einen geometrischer Verlauf einer umschließenden Hülle, beispielsweise ein Parameter eines Kreises, der die zugrundeliegende Kontur umschließt oder ein Parameter eines der zugrundeliegenden Kontur zugeordneten Flächeninhalts oder ein Parameter einer der zugrundeliegenden Kontur zugeordneten Diagonale. Weitere Dateneinträge in den Zusatztrainingsdatensätze im Rahmen der Konstruktion können die zugrundeliegenden Materialien, bei der additiven Fertigung zum Beispiel Schichtstrukturen und Schichtdicken, Überhangwinkel, betreffen. Zudem können weiter Dateneinträge vorgenommen werden, die Informationen über den späteren Einsatz eines Teiles charakterisieren, z.B. Informationen zu Sichtkanten, Auflageflächen, nachfolgende Prozessschritte wie Schweißen oder Biegen....

Im Rahmen der Fertigung mit der Werkzeugmaschine umfassen die Zusatztrainingsdatensätze Fertigungsprozessparameter, die eine Bearbeitung mit der Werkzeugmaschine definieren. Üblicherweise sind die Fertigungsprozessparameter einem Abschnitt des Bauteils zugeordnet. Beispiele sind Kantenlinien, Schneidlinien, Biegelinien, Auftragslinien, Fügelinien, insbesondere bei Biegevorgängen zum Beispiel Federeffekt-Kompensation und bei Stanzvorgängen benötigte Lasten etc. Hinsichtlich der Fertigung können Zusatztrainingsdatensätze Dateneinträge umfassen, die Einstellgrößen der Werkzeugmaschine, Bearbeitungsstrategien, Prozesssicherheitseinflüsse umfassen. Die Dateneinträge können eine Kollisionsvermeidung betreffen und Parameter zur Laserleistung, zum Schneidgas und zu Abmessungen für Kollisionskörper umfassen.

Zur Berücksichtigung des Nutzungsumfelds 3 können in die Zusatztrainingsdatensätze 31 ferner aufgenommen werden:
- Maschinenparameter, die der Werkzeugmaschine zugeordnet sind: bspw. verfügbare Stanzwerkzeuge, maximale Hubkraft, minimale/ maximale Laserleistung, verfügbare Wellenlänge, Schutzgaseinsatz etc.
- Nutzerparameter, die einem Nutzer der Werkzeugmaschine zugeordnet sind: Auftraggeber, Auftragnehmer, Zeitfenster zur Nutzung, sowie standardmäßig vom Nutzer vorgenommene Einstellungen/-änderungen z.B. an Prozessablaufparametern, beim Stanzen zum Beispiel Bevorzugung von leisen Bewegungsprofilen etc.
- Prozessablaufparameter, die dem Ablauf eines Bearbeitungsprozesses zugeordnet sind: jeweils in Abhängigkeit von Werkstück/Baumaterial (Blechdicke, Materialart, Pulverkorngröße, ...) für eine Laserbearbeitung z.B. Laserleistung für Schweißvorgänge/Schneidvorgänge/Aufschmelzvorgänge, Schweiß-/Schneid-/Schmelzgeschwindigkeit etc.

Ferner können Daten aus einem oder mehreren der folgenden Einsatzgebiete und Steuerungsrahmenbedingungen in die Zusatztrainingsdatensätze 31 aufgenommen werden:
- Zielgruppen-Identifikation, wie z.B. Daten zum Kunden;
- Bearbeitungsprofile, insbesondere kundenspezifischen Bearbeitungsprofile, mit Parametern, die einen Bearbeitungsvorgang auf ein Bearbeitungsprofil abbilden, beispielsweise auf ein kundenspezifisches Bearbeitungsprofil, welches für einen Kunde spezifiziert, ob dieser ein Teil "schnell" oder "hochwertig" oder "sicher" produzieren will;
- autonome Funktionen einer Werkzeugmaschine; diese umfassen Parameter, die von einer Werkzeugmaschine eigenständig berücksichtigt werden, wie eine Anfahrfahne, eine Konturgröße, ein Spritzkreis, eine Schnittreihenfolge, ein Messpunkt, ein Messzyklus und/oder ein Werkzeugwechsel;
- Auswahl von passenden Technologietabellen wie Laser-Technologietabellen und Regelwerken, in denen Bearbeitungsparameter und Daten der Bearbeitung abgelegt sind;
- optimale Maschinenauswahl;
- Schneidzeit;
- Produktionskosten.

Die Zusatztrainingsdatensätze 31 bilden bevorzugt zusammen mit den Herstellertrainingsdatensätzen 117 eine sich auf das Nutzungsumfeld 3 ausrichtende Wissensdatenbank, mit der die Parameter Pi des Trainings-ML-Algorithmus 111 an das Nutzungsumfeld 3 angepasst werden können. Die Werte für die Parameter Pi, die sich aus dem Training des Trainings-ML-Algorithmus 111 ergeben, können wieder an das CAD-CAM-Systeme 7 übermittelt und zur Einstellung des ML-Algorithmus 11 genutzt werden.

Zur Verdeutlichung des Datenflusses hinsichtlich möglicher Zusatztrainingsdatensätze sind in Fig. 1 beispielhaft Trainingsdatenausgänge 33A, 33B, 33C für das CAD-System 7A, das CAM-System 7B und die Maschinensteuerungen 9A angedeutet. Die Trainingsdatenausgänge 33A, 33B, 33C erlauben die Übermittlung von Zusatztrainingsdatensätzen an das ML-Trainingsumfeld 5, im speziellen die Trainingsdatenbank 119.

Ferner sind in Fig. 1 beispielhafte Parametereingänge 35A, 35B, 35C angedeutet, über die die mit dem Trainings-ML-Algorithmus 111 bestimmten Werte der Parameter Pi in das Nutzungsumfeld 3 übertragen werden können. Dies bezieht sich insbesondere auf den ML-Algorithmus 11 des CAD-CAM-Systems 7. Optional können aber auch entsprechende ML-Algorithmen in einem CAD-System oder in der Maschinensteuerungen 9A eingesetzt werden. In Fig. 1 ist beispielhaft ein (Werkzeugmaschinen-) ML-Algorithmus 11_m in einem Prozessor 27_m der Maschinensteuerungen 9A zusammen mit einem Speichermedium 15_m der Maschinensteuerung 9A angedeutet. Der (Werkzeugmaschinen-) ML-Algorithmus 11_m kann beispielsweise einen werkzeugmaschinenseitig modifizierten Steuerungsdatensatz 17_m erzeugen, für den die Maschinensteuerungen 9A einen Zusatztrainingsdatensatzes 31_m erzeugen und ausgeben kann.

Zusätzlich zu den Eingangsparameter des ML-Algorithmus 11, wie sie üblicherweise für die Erstellung eines Steuerungsdatensatzes benötigt werden, können weitere Eingangsparameter in die Zusatztrainingsdatensätze 31 aus dem Betrieb der Fertigungsanlage 1 eingehen. Beispielhaft ist in Fig. 1 angedeutet, dass Parameter aus dem Bereich der Logistik 37 mit aufgenommen werden, die beispielsweise die zeitlich effiziente Handhabung oder die zur Verfügung stehenden Materialien in das Training des Trainings-ML-Algorithmus einfließen lassen.

Eine Ausrichtung von ML-Algorithmus-basierter CNC-Programmierung unter Berichtigung des Nutzungsumfelds kann beispielsweise dazu führen, dass automatisch für einen Kunden A die Fertigung vieler gleicher Teile möglichst prozesssicher durchgeführt wird, wobei das gleiche Teil mit der gleichen Werkzeugmaschine für einen Kunden B in geringer Stückzahl, aber dafür optimiert für jedes einzelne Bauteil gefertigt wird. Die hierin vorgeschlagenen Konzepte ermöglichen somit eine unterschiedliche Anpassung des ML-Algorithmus je nach Kundenanforderung. Zum Beispiel werden ausgehend von vom Hersteller vorgegebenen Gewichten in einem als neuronales Netzwerk ausgebildeten ML-Algorithmus die Gewichte kundenspezifisch angepasst.

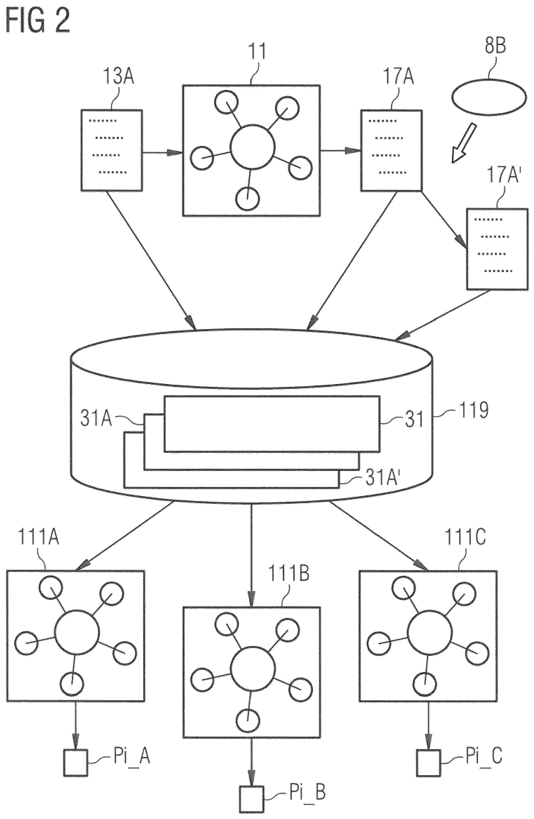

Fig. 2 verdeutlicht im oberen Abschnitt den Aufbau einer Nutzer-spezifischen Trainingsdatenbank ("Knowledge Base") sowie im unteren Abschnitt das bestimmen Nutzungsumfeld-spezifischer Parameter von ML-Algorithmen.

Während des Betriebs der hierin offenbarten Fertigungsanlage 1 erfolgt - ausgehend von einem vom Hersteller trainierten ML-Algorithmus 11 - ein Nutzungsumfeld-basiertes Weiterlernen des ML-Algorithmus 11. Beispielsweise werden fortlaufend Bauteildatensätze vom CAM-System 7B empfangen, wobei die Bauteildatensätze digitale Konstruktionsmodelle von Bauteilen darstellen. Aus den Bauteildatensätzen erzeugt das CAM-System 7B Steuerungsdatensätze. In Fig. 2 ist ein Bauteildatensatz 13A angedeutet, für den der ML-Algorithmus 11 einen Steuerungsdatensatz 17A erzeugt. Bauteildatensatz 13A und Steuerungsdatensatz 17A können als Teil eines Zusatztrainingsdatensatzes 31A in der Trainingsdatenbank 119 abgelegt werden. Ferner kann z.B. der Maschinenprogrammierer 8B Modifikationen an dem Steuerungsdatensatz 17A vornehmen, sodass sich ein angepasster (maschinennumerischer) Steuerungsdatensatz 17A' ergibt. Auch dieser kann zusammen mit dem Bauteildatensatz 13A als Zusatztrainingsdatensatz 31A' in der Trainingsdatenbank 119 abgelegt werden. Auf diese Weise kann für ein Nutzungsumfeld eine umfassende Trainingsdatenbank aufgebaut werden. Bevorzugt kann die Trainingsdatenbank 119 beim Hersteller vorliegen, da die dort bereits vorliegende Hard- und Software-Infrastruktur auch für die Nutzungsumfeld-Optimierung der KI genutzt werden kann. Beispielsweise kann die Nutzungsumfeld-Optimierung in Intervallen von vorgegebenen zusätzlichen Zusatztrainingsdatensätzen durchgeführt werden.

Im unteren Abschnitt der Fig. 2 wird verdeutlicht, wie mithilfe der Wissensdatenbank 119 einzelne Problem-Anfragen bei der Programmierung von Steuerungsdatensätzen individuell mit ML-Algorithmen beantwortet/bearbeitet werden können. Beispielsweise können für die Problemstellung des Vergebens von Microjoints beim Ausschneiden von Bauteilen mit einer Laserschneidmaschine mehrere ML-Algorithmen eingesetzt werden. So wird ein ML-Algorithmus 111A für die Bewertung vorgesehen, ob Microjoints bei einem Ausschneidevorgang eines Bauteils notwendig sind oder nicht, ein ML-Algorithmus 111B bestimmt die Anzahl von notwendigen Microjoints und ein ML-Algorithmus 111C dient der Bewertung von Positionen der Microjoints. Mithilfe der hierin vorgeschlagenen Konzepte können nun für ein spezifisches Nutzungsumfeld die Parameter Pi_A, Pi_B, Pi_C mithilfe entsprechender Trainingsalgorithmen und der Trainingsdatenbank 119 fortlaufend kundenspezifisch angepasst werden. Eine Nutzungsumfeld-spezifische Anpassung hinsichtlich des Vergebens von Microjoints kann beispielsweise eine Fehlerreduzierung auf kleiner als 1-2%, z.B. kleiner als 0,5 % ermöglichen.

Ein weiteres Beispiel einer Nutzungsumfeld-spezifischen Anpassung betrifft beispielsweise das Kleinschneiden von Restmaterialien (dem Restgitter) in Laserschneidvorgängen.

Die Zusatztrainingsdatensätze stellen jeweils ein Datum für die ML-Algorithmen dar. Dabei können für die verschiedenen ML-Algorithmen unterschiedliche Untergruppen der Einträge in den Zusatztrainingsdatensätzen genutzt werden. Beispielsweise können in ein Datum der genannten ML-Algorithmen als bauteilspezifische Parameter ein Konturverlauf des Bauteils, die Anzahl und Position von Ecken, Materialeigenschaften wie Gewicht und Blechdicke etc. eingehen. Ferner können Maschinenparameter wie die aktuelle Programmversion, die der Bearbeitung einer zugrunde liegt, das Alter der Bearbeitungseinheit und die Ausführungsvariante der Werkzeugmaschine eingehen.

In Fig. 2 wurden die verschiedenen ML-Algorithmen 111A, 111B, 111C separat dargestellt, diese können aber auch gemeinsam in einem übergreifenden ML-Algorithmus zusammengefasst werden, der dann beispielsweise nicht nur das Setzen von Microjoints, sondern den gesamten Schneidvorgang und überdies eventuell weitere Bearbeitungsvorgänge wie Biegen und Schweißen in einem abbildet.

Es wird ergänzend darauf hingewiesen, dass üblicherweise KI für Werkzeugmaschinen nur vom Hersteller in einem ausreichenden Maße trainiert werden kann, da dieser die verschiedenen Bearbeitungsmöglichkeiten während der Testvorgänge in einer Wissensdatenbank sammeln kann. Anderseits kann jedoch nur der Kunde in einen gewissen Nutzungsumfeld seine spezifischen Anforderungen an die KI stellen. Die hierin vorgeschlagenen Konzepte zur Strukturierung eines Wechselspiels zwischen Nutzungsumfeld 3 und ML-Trainingsumfeld 5 für die Optimierung von KI erlauben es nun, die herstellerspezifisch bereitgestellte KI kundenspezifisch weiterlernen zu lassen.

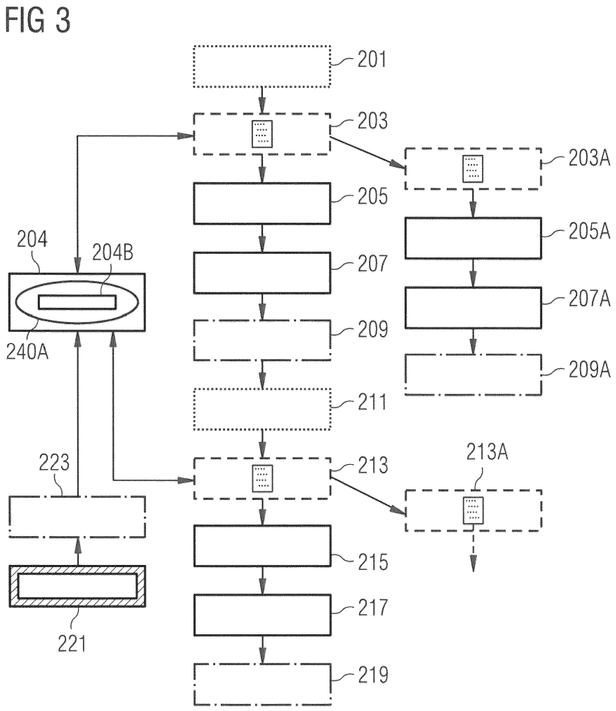

Nachfolgend wird mit Bezug auf Fig. 3 ein gemäß den hierin vorgestellten Konzepten umgesetztes computerimplementiertes Verfahren aus Sicht eines Prozessors eines (CAD-) CAM-Systems beschrieben. Das Verfahren kann von mindestens einem Computer (Prozessor) ausgeführt werden und maschinennumerische Steuerungsdatensätze zur Ansteuerung von Werkzeugmaschinen in einem Nutzungsumfeld erstellen, wobei die Steuerungsdatensätze speziell auf dieses Nutzungsumfeld abgestimmt sind. Die Steuerungsdatensätze können von zugehörigen Werkzeugmaschinen in diesem Nutzungsumfeld für die Bearbeitung von Ausgangsmaterialien, insbesondere für die Bearbeitung von Metall- oder Blechteilen mit Trenn-, Form- und/oder Fügefertigungsverfahren, eingelesen werden.

Im Schritt 201 wird ein erster Bauteildatensatz, der ein digitales Konstruktionsmodell eines ersten Bauteils darstellt, in einem Prozessor des mindestens einen Computer des (CAD-) CAM-Systems empfangen (eingelesen).

Im Schritt 203 erstellt der Prozessor einen ersten maschinennumerischen Steuerungsdatensatz für den ersten Bauteildatensatz unter Verwendung einer Steuerungsprogramm-Erzeugungssoftware 204. Die im Prozessor ablaufende Steuerungsprogramm-Erzeugungssoftware 204 umfasst eine Bewertungsroutine 204A, die einen trainierten Algorithmus zum maschinellen Lernen (ML-Algorithmus) einsetzt. Der ML-Algorithmus weist eine Mehrzahl von einstellbaren Parametern (z.B. optimierte / trainierte Gewichte) auf, die auf Anfangswerte der Parameter durch ein Training eines Trainingsalgorithmus zum maschinellen Lernen gesetzt wurden. Hierzu entspricht das Modell des Trainingsalgorithmus dem Modell des trainierten ML-Algorithmus. Der Trainingsalgorithmus umfasst entsprechend die gleiche Programmstruktur wie der ML-Algorithmus. Üblicherweise ist der Trainingsalgorithmus auf einem Computersystem des Herstellers der zugehörigen Werkzeugmaschine installiert. Das Computersystem des Herstellers stellt eine hohe Rechenleistung bereit, um die hohe Anzahl von Trainingsschritten schnell durchzuführen. Allgemein kann zum Trainieren auch der ML-Algorithmus eingesetzt werden, wenn dieser auf einer entsprechend geeignetem Computersystem installiert ist und entsprechend dazu eingerichtet ist, auch für Trainingsabläufe eingesetzt werden zu können.

Im Schritt 205 stellt der Prozessor einen ersten Zusatztrainingsdatensatz aus dem Bauteildatensatz und dem erstellten maschinennumerischen Steuerungsdatensatz zusammen. Im Schritt 207 gibt der Prozessor den ersten Zusatztrainingsdatensatz an eine Nutzungsumfeld-spezifische Trainingsdatenbank aus. Die Trainingsdatenbank ist z.B. als ein Teil des Computersystems des Trainingsalgorithmus installiert. Sie kann z.B. auf einem Speichermedium des Computersystems des Herstellers abgelegt sein. Auch hier gilt, dass die Trainingsdatenbank für ein Training, das durch den Prozessor eines (CAD-) CAM-Systems erfolgt, auf einem Speichermedium im Nutzungsumfeld abgelegt werden kann.

Nutzungsumfeld-spezifische Werte für die Parameter des ML-Algorithmus werden durch ein Training des Trainingsalgorithmus zum maschinellen Lernen mit der Nutzungsumfeld-spezifischen Trainingsdatenbank bestimmt. Die Nutzungsumfeld-spezifischen Werte werden an den Prozessor übertragen und im Schritt 209 wird der ML-Algorithmus durch Einstellen von Nutzungsumfeld-spezifischen Werten für die Parameter aktualisiert.

Anschließend empfängt der Prozessor im Schritt 211 einen zweiten Bauteildatensatz, der ein digitales Konstruktionsmodell eines zweiten Bauteils darstellt. Im Schritt 213 erstellt der Prozessor einen zweiten maschinennumerischen Steuerungsdatensatz für den zweiten Bauteildatensatz unter Verwendung der Steuerungsprogramm-Erzeugungssoftware 204 und Durchlaufen der Bewertungsroutine 204A. Dabei wird der hinsichtlich der Parameter aktualisierte ML-Algorithmus eingesetzt.

Im Rahmen der Erstellung von Steuerungsdatensätzen kann ein Maschinenprogrammierer die Eingangsparameter über ein Programmierinterface der Steuerungsprogramm-Erzeugungssoftware einstellen. Der Maschinenprogrammierer kann ferner gegebenenfalls die von der Steuerungsprogramm-Erzeugungssoftware 204 erstellten Steuerungsdatensätzen überprüfen und abändern.

Beispielsweise erfolgt im Schritt 203A ein Anpassen des ersten maschinennumerischen Steuerungsdatensatzes durch den Maschinenprogrammierer. Entsprechend wird ein angepasster erster maschinennumerischer Steuerungsdatensatz erstellt. Im Schritt 205A kann der Prozessor einen weiterer Zusatztrainingsdatensatz nun aus dem angepassten maschinennumerischen Steuerungsdatensatz und dem ersten Bauteildatensatz erstellen und für eine Erweiterung der Nutzungsumfeld-spezifischen Trainingsdatenbank ausgegeben (Schritt 207A). Im Schritt 209A kann der Prozessor den ML-Algorithmus durch Einstellen von Nutzungsumfeld-spezifischen Werten für die Parameter aktualisieren, wobei die Nutzungsumfeld-spezifischen Werte durch ein Training des Trainingsalgorithmus zum maschinellen Lernen auf der um den weiteren Zusatztrainingsdatensatz erweiterten Nutzungsumfeld-spezifischen Trainingsdatenbank bestimmt wurden.

Analog kann in einem Schritt 213A auch der zweite maschinennumerische Steuerungsdatensatz durch einen Maschinenprogrammierer zum Erstellen eines angepassten zweiten maschinennumerischen Steuerungsdatensatz angepasst werden. Es können wieder Zusatzdaten erstellt und ausgegeben werden (dargestellt durch den gestrichten Pfeil, siehe auch Schritte 205A bis 209A).

Allgemein können Anpassungen von maschinennumerischen Steuerungsdatensätzen vorgenommen werden:
- von einem Konstrukteur durch Modifizieren von Bauteildatensätzen und weiterer Dateneinträge zu einem Bauteil;
- von einem Maschinenprogrammierer nach Simulieren der Ansteuerung der Werkzeugmaschine mit einem Simulationsprogramm des CAM-Systems zur Fertigung des Bauteils, wobei das Simulationsprogramm die Fertigung mit dem maschinennumerischen Steuerungsdatensatz simuliert;
- von einem Werkzeugmaschinenbediener nach Einlesen des maschinennumerischen Steuerungsdatensatzes in eine numerische Maschinensteuerung der Werkzeugmaschine und Umwandeln des maschinennumerischen Steuerungsdatensatzes in eine Mehrzahl von Steuerungsroutinen, insbesondere nach einer Bearbeitung eines Ausgangsmaterials mit einer Bearbeitungseinheit der Werkzeugmaschine durch Ansteuern der Bearbeitungseinheit mit den Steuerungsroutinen.

Dies ist im Schritt 215 angedeutet, in dem der Prozessor allgemein weitere Zusatztrainingsdatensätze aus angepassten maschinennumerischen Steuerungsdatensätzen und zugehörigen Bauteildatensätzen zusammenstellt und im Schritt 217 für eine Erweiterung der Nutzungsumfeld-spezifischen Trainingsdatenbank ausgibt.

Ein weiteres Training des Trainingsalgorithmus zum maschinellen Lernen kann auf der um die Zusatztrainingsdatensätze erweiterten Nutzungsumfeld-spezifischen Trainingsdatenbank durchgeführt werden. Der Prozessor aktualisiert in einem Schritt 219 den ML-Algorithmus durch Einstellen der sich ergebenden Nutzungsumfeld-spezifischen Werten für die Parameter.

Eine Werkstückbearbeitung kann im Prinzip mit jedem der erzeugten Steuerungsdatensätze durchgeführt werden.

Hinsichtlich der immer wieder anhand von neuen Zusatzdatensätzen erfolgenden (periodischen) Aktualisierung des ML-Algorithmus wird in Fig. 3 ein Trainieren des Trainingsalgorithmus zum maschinellen Lernen auf der Nutzungsumfeld-spezifischen Trainingsdatenbank zur Erzeugung der Nutzungsumfeld-spezifischen Werte der Parameter als ein eigener Schritt 221 verdeutlicht. Das Training kann durch ein eigenes Trainingscomputersystem oder auch mit dem Prozessor eines (CAD-) CAM-Systems erfolgenDie gewonnenen Nutzungsumfeld-spezifischen Werte der Parameter werden entsprechend an die Steuerungsprogramm-Erzeugungssoftware 204 zur Aktualisierung (Schritt 223) des ML-Algorithmus mit den Nutzungsumfeld-spezifischen Werten der Parameter übertragen. In der Nutzungsumfeld-spezifische Trainingsdatenbank können mindestens ein Zusatztrainingsdatensatz, der auf einen maschinennumerischen Steuerungsdatensatz zurückgeht, der im Nutzungsumfeld erstellt wurde, und optional ein oder mehrere Trainingsdatensätze, die unabhängig vom Nutzungsumfeld und insbesondere von einem Hersteller der Werkzeugmaschine bereitgestellt wurden, abgelegt werden.

Zusammengefasst wird der ML-Algorithmus / ein ML-Modell in mehreren Phasen eingesetzt:
1. (erste) Trainingsphase: Der Hersteller von Werkzeugmaschinen trainiert ein ML-Modell auf leistungsstarken Rechnersystemen. Das ML-Modell wird auf Daten einer Wissensdatenbank, insbesondere mit Daten des Herstellers, trainiert. Die Parameter / Gewichte des ML-Models werden in der Trainingsphase optimiert / verbessert.
2. Nutzungsphase: Das fertige und trainierte (vom Herstellerbereitgestellte) ML-Modell wird in einem Produktionsumfeld eines Kunden genutzt, z.B. auf einem Rechnersystem des Kunden installiert. Dies erlaubt es dem Kunden, innerhalb weniger Millisekunden Vorhersagen zur Fertigung wie Klassifikationen, Regressionen oder Clusterings zu berechnen. In der Nutzungsphase werden parallel neue Daten für die Wissensdatenbank gesammelt. Diese können in den verschiedenen Produktionsschritten (Planung, Programmierung, Bearbeitung) gewonnen werden.
3. Updatephase: In periodischen Abständen wird das ML-Modell neu trainiert. D.h., Parameter / Gewichte des ML-Models werden in weiteren Trainingsphasen immer wieder neu trainiert. Nach einem erfolgreichen Training werden die Parameter / Gewichte auf dem Rechnersystem des Kunden geupdatet und eine weitere Nutzungsphase schließt sich an.

In diesem Kreislauf eines immer weiter lernenden Systems sammelt das ML-Modell über die Zeit immer mehr Wissen und wird somit kontinuierlich besser. Ein Update kann nun für alle Kunden erfolgen oder spezifisch für eine Nutzergruppe oder sogar für einen einzelnen Kunden durchgeführt werden. Im letzteren Fall kann das ML-Modell insbesondere auf einen Kunden ausgerichtet, wenn die Wissensdatenbank primär um Daten dieses Kunden erweitert wird.

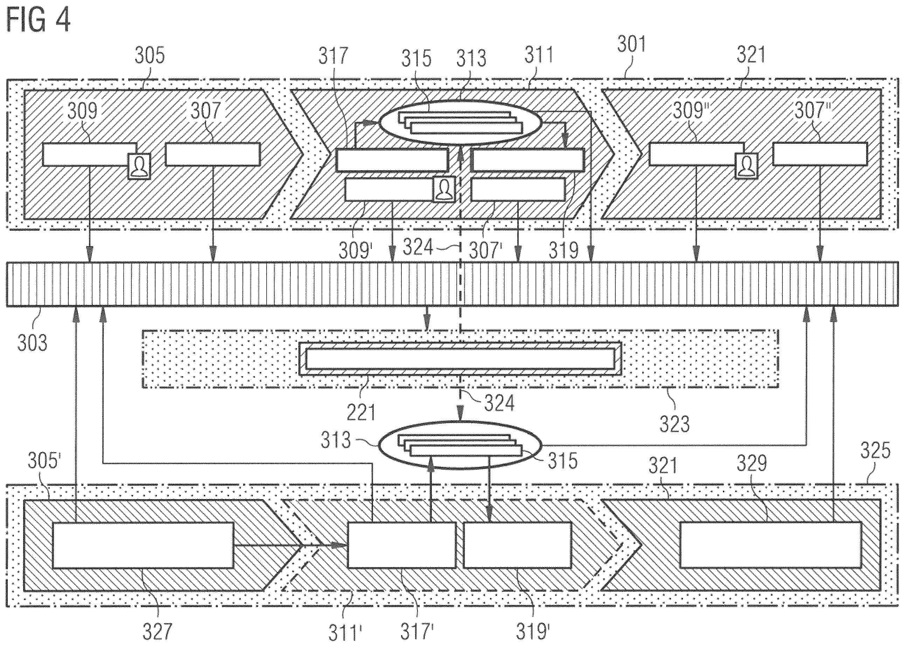

Der zuvor anhand von Fig. 3 beispielhaft erläuterte Ablauf zur Verwendung eines ML-Algorithmus steht im Zusammenhang mit zwei Stufen der Umsetzung der hierin vorgeschlagenen Erfindung. Dies wird nachfolgend mit Bezug auf Fig. 4 erläutert.

Die erste Stufe 301 ist ein konventioneller (manueller) Betrieb einer Werkzeugmaschine, wobei der konventionelle Betrieb bevorzugt schon ein ML-Modell einbindet. Der konventionelle Betrieb stellt eine generische Trainingsstufe dar, in dem ein Aufbau einer Nutzungsumfeld-spezifischen Trainingsdatenbank (Wissensdatenbank 303) stattfindet. Ist ein ML-Modell in den Betrieb der Werkzeugmaschine eingebunden, kann ein Nutzungsumfeld-spezifisches Trainieren 221 des ML-Modells anhand von Bauteilprogrammen erfolgen. In der ersten Stufe 301 umfasst der konventionelle (manuelle) Betrieb die folgenden Schritte:

### 1. Bauteil-Konstruktion im Rahmen eines CAD-Systems 305 mit einer Bedieneroberfläche:

Ein Konstrukteur konstruiert ein Bauteil und erzeugt einen entsprechenden Bauteildatensatz (oder ein Bauteildatensatz eines zuvor konstruierten Bauteils wird importiert). Informationen über das Bauteil werden gesammelt und an die Wissensdatenbank 303 gesendet. Die Informationen umfassen Merkmale 307 des Bauteils und insbesondere Merkmale von Konturen des Bauteils. Ferner umfassen die Informationen z.B. Details 309 von prozesskritischen Konturen, die vom Konstrukteur erkannt wurde.

### 2. Bauteil-Programmierung im Rahmen eines CAM-Systems 311 mit einer Bedieneroberfläche:

Die Programmierung erfolgt möglichst automatisch. Dabei werden viele einzelne Schritte für die maschinelle Bearbeitung automatisch/autonom berechnet, beispielsweise eine Schnittreihenfolge, Einstechpunkte, Einstecharten, Anfahrstrategien, Microjoints, Freischnitte, Be- und Entladestrategien, Kollisionsvermeidungen, Konturgrößen, verwendete Werkzeuge, Werkzeugwechsel, Schachtelung, Messzyklen, Zeitberechnung, Kostenberechnung, usw. Die einzelnen Schritte bilden das zu dem Bauteil gehörende Steuerungsprogramm (Bauteil-Programm).

Bei der Programmierung kann zumindest ein Teil der Berechnungen durch KI-Modelle, insbesondere unter Verwendung von Algorithmen des maschinellen Lernens (datengetrieben erfolgen. Der Algorithmus soll ein produktionssicheres, schnelles und qualitativ hochwertiges Programm mit den dazugehörigen Prozessdaten für die Fertigung des Bauteils erzeugen. Dazu umfasst eine Steuerungsprogramm-Erzeugungssoftware eine Bewertungsroutine 313, der ein oder mehrere ML-Modelle 315 (Algorithmen zum maschinellen Lernen mit einstellbaren Parametern) zugrunde liegen und die in einem Prozessor des CAM-System 311 geladen ist. Beispielsweise beantwortet das ML-Modell 315 eine im Rahmen der Programmierung gestellte Anfrage 317 nach einer prozesskritischen Kontur mit Merkmalen aus dem CAD-System 305 und/oder dem CAM-System 311. Beispielsweise erkennen ein oder mehrere ML-Modelle 315 eine oder mehrere prozesskritische Konturen und geben eine jeweils passende Lösung 319 an das CAM-System 311 aus, die dann bei der Erstellung des Steuerungsprogramms berücksichtigt werden.

Die Abnahme des vom Algorithmus erstellten Bauteil-Programms erfolgt manuell durch einen Maschinenprogrammierer. Dieser kann die komplette Bauteilfertigung simulieren, anpassen, ändern und optimieren. Jede einzelne Änderung und das finale Bauteil-Programm (final bzgl. der Programmierung) werden nun wieder als Informationen an die Wissensdatenbank 303 gesendet. Die Informationen umfassen Merkmale 307' des Bauteils und insbesondere Merkmale von Konturen des Bauteils. Ferner umfassen die Informationen Details 309' zu prozesskritischen Konturen, die vom CAM-System 311 bei der Programmierung oder vom Programmierer erkannt wurde.

### 3. Fertigung 321 mit Bedieneroberfläche der Werkzeugmaschine:

Das finale Bauteil-Programm (Steuerungsprogramm) wird nun z.B. auf der Blechbearbeitungsmaschine abgearbeitet. Hierbei hat ein Maschinenbediener nun wiederum die Möglichkeit das Programm zu überbearbeiten. D.h., der Maschinenbediener passt das Programm an, um das Bauteil in seinem Nutzungsumfeld erfolgreicher produzieren zu können. Gründe können hierbei aufgetretene Kollisionen sein, negatives Feedback der Werkzeugmaschine in Form von Sensoren, Bearbeitungsparametern oder produktgetriebene Optimierungen. Jede einzelne Änderung und das finale Bauteil-Programm (final bzgl. der letztendlich durchgeführten Fertigung) wird an die Wissensdatenbank gesendet.

Informationen über das gefertigte Bauteil werden gesammelt und an die Wissensdatenbank 303 gesendet. Die Informationen umfassen Merkmale 307" des Bauteils und insbesondere Merkmale von Konturen des Bauteils. Ferner umfassen die Informationen z.B. Details 309" von prozesskritischen Konturen, die vom Konstrukteur erkannt wurde.

Der beschriebene konventionelle (manuelle) Betrieb führt zu einem Aufbau und einer ständigen Erweiterung der Wissensdatenbank 303 (unter Berücksichtigung des Nutzungsumfelds). Alle Daten des CAD-Systems 305, des CAM-Systems 311 und der Maschine (Fertigung 321) können über eine einzigartige Identifikationsnummer für ein Bauteil verbunden werden. So kann erkannt werden, ob ein Benutzer in irgendeinem dieser Systems eine Anpassung getätigt hat. In Fig. 4 verdeutlichen die zur Wissensdatenbank 303 führenden Pfeile Übertragungen von Informationen/Daten (Datenströme), die zu einem Bauteil/Bauteilprogramm gehören und in den verschiedenen Phasen der Erzeugung von CAD-Daten, CAM-Steuerungsprogrammen und finalen Maschinenroutinen evtl. von einem - schematisch in Fig, 4 angedeuteten - Bediener angepasst werden.

Fig. 4 deutet ferner an, wie mit der Wissensdatenbank 303 ein Nutzungsumfeld-spezifisches Trainieren 221 von mehreren ML-Modellen (angesprochene Updatephase 323) durchgeführt wird. Beispielsweise kann für jede Art einer prozesskritischen Kontur (z.B. Freischnitte und Mircojoints) ein separates ML-Modell 315 trainiert werden. Als Ergebnis des Trainings werden Parameter der ML-Modelle 315 aktualisiert (gestrichelte Pfeile 324 in Fig. 4).

Mittels der so aufgebauten Wissensdatenbank 303 können u.a. zwei Verbesserungen erreicht werden: Zum einen kann der optimale Maschinenprozessablauf an Kunden geliefert werden und zum anderen kann das Verhalten des Kunden erlernt und vom Algorithmus bei der Erstellung von Bauteilprogrammen verwendet werden. Ziel ist es somit, Muster von Bauteildaten und Bauteilprogrammen (die hierin gemeinsam auch als Zusatztrainingsdatensätze bezeichnet werden) in einer großen Datenmenge zu erlernen und eine breite Anzahl an verschiedenen Produkten erfolgreich zu automatisieren. Diese Mustererkennung mithilfe des ML-Algorithmus kann nun verwendet werden, um die einzelnen Prozessschritte der Bauteil-Programmierung zu optimieren.

In der zweiten (finalen) in Fig. 4 angedeuteten Stufe der Umsetzung der hierin offenbarten Erfindung (autonomer Betrieb 325) entsteht ein voll autonomer iterativer Ablauf bei der Programmierung von Bauteilprogrammen. Dieser umfasst einen "autonomen" Schritt 2' der Bauteil-Programmierung im Rahmen eines autonomen CAM-Systems 311', ohne ein Eingreifen eines Bedieners (da das System sich selbst optimiert).

Bei einer Bauteil-Konstruktion 327 unter Verwendung eines CAD-Systems 305' werden Merkmale und Bedienerinteraktionen zu einem Bauteil an die Wissensdatenbank 303 gesendet, um darauf basierend ML-Modelle 315 des autonomen Betriebs 325 zu optimieren. Informationen zum Bauteil werden an das autonome CAM-System 311' übergeben. Im Rahmen der Programmierung eines Steuerungsprogramms mit dem autonomen CAM-System 311' kann eine Anfrage 317' an eine Bewertungsroutine 313 nach prozesskritischen Konturen mit Merkmalen aus dem CAD-System 305' und dem CAM-System 311' abgegeben werden. Die Bewertungsroutine 313 läuft z.B. auf einem eigenen Prozessor, im Rahmen einer Cloud-Lösung (in Fig. 4 angedeutet) oder auf einem Prozessor des autonomen CAM-System 311' ab. Ein oder mehrere ML-Modelle 315 erkennen eine oder mehrere prozesskritische Konturen und geben eine jeweils passende Lösung 319' aus, die vom Prozessor bei der Erstellung eines Steuerungsprogramms berücksichtigt wird. Zum Beispiel werden Freischnitte und Mircojoints automatisch positioniert. Das autonome CAM-System 311' gibt das Bauteil-Programm (Steuerungsprogramm) an die Fertigung 321 aus. Merkmale und manuellen Eingriffe werden beispielsweise von einer Bedieneroberfläche 329 der Werkzeugmaschine ausgegeben, um die Wissensdatenbank 303 zu erweitern und langfristig die ML-Modelle 315 zu optimieren.

Durch ein Wiederholen der Schritte 1, 2' (ohne die Beteiligung von Personen) und 3 sowie der Updatephase 323 werden die einzelnen ML-Algorithmen und im gesamten die Bauteil-Programmierung verbessert, sodass eine autonome Produktion ermöglicht wird, und zwar unabhängig von der Konstruktion und der verwendeten Werkzeugmaschine.

Allgemein kann ein ML-Algorithmus als neuronales Netzwerk ausgebildet werden. Beispielsweise kann das neuronale Netzwerk eine Mehrzahl von neuronalen Kernnetzschichten enthalten, die jeweils durch einen Satz von Parametern (z.B. Parameter Pi) als Gewichte definiert sind. Schritt 209 des Aktualisierens umfasst dann ein Aktualisieren des neuronalen Netzwerks durch Zuordnen von Nutzungsumfeld-spezifischen Werten zu den Parametern des neuronalen Netzwerks, wobei die Nutzungsumfeld-spezifischen Werte basierend auf der Nutzungsumfeld-spezifischen Trainingsdatenbank bestimmt wurden.

Der ML-Algorithmus kann ferner als evolutionärer Algorithmus (genetic algorithm), Support Vector Machine-Algorithmus oder als Algorithmus zur automatischen Induktion eines Entscheidungsbaums, z.B. als ID3-Algorithmus oder C4.5-Algorithmus, ausgebildet sein. Er umfasst dann ein Modell, in das die Parametern Pi eingehen, um z.B. einen Entscheidungsbaum zu definieren. Schritt 209 des Aktualisierens umfasst dann ein Aktualisieren des ML-Algorithmus durch Zuordnen von Nutzungsumfeld-spezifischen Werten zu den Parametern des Modells, wobei die Nutzungsumfeld-spezifischen Werte basierend auf der Nutzungsumfeld-spezifischen Trainingsdatenbank bestimmt wurden.

Die hierin beschriebene Umsetzung einer auf einem ML-Algorithmus basierenden Maschinensteuerung können zum Teil die folgenden Vorteile aufweisen:
- Fertigungsprozesse, Teilprozesse und Bauteilgeometrien können zuverlässig (teil-) automatisiert werden.
- ML-Algorithmen können sich (teil-) automatisiert schnell an den Markt, den Kunden anpassen.
- ML-Algorithmen, die anfangs für den gesamten Markt erstellt wurden, werden im Laufe der Nutzung kundenspezifisch ausgerichtet.
- Die automatische Programmierung unterstützt sehr gut ausgebildete sowie weniger gut ausgebildete Programmierer und Maschinenbediener.
- Der Ansatz, eine Wissensdatenbank aus vielen Daten, wie Kundenanpassungen, geometrische Beschreibungen, Prozessdaten und Maschinendaten (Log, Sensoren, ...), zu verwenden, ermöglicht vielfältige Nutzungsmöglichkeiten von ML-Algorithmen z.B. in der Metall- und Blechbearbeitung.

Die hierin genannten Vorteile müssen nicht notwendigerweise durch die erfinderischen Gegenstände der unabhängigen Patentansprüche erzielt werden. Vielmehr kann es sich hierbei auch um Vorteile handeln, welche lediglich von einzelnen Ausführungsformen, Varianten oder Weiterbildungen erzielt werden.

Ausführungsformen der Erfindung und die hierin beschriebenen funktionalen Operationen können in digitalen elektronischen Schaltungen, in Computer-Software oder Computer -Firmware, in Computer-Hardware, einschließlich der hierin genannten oder ähnlichen Strukturen implementiert werden. Ausführungsformen können als ein oder mehrere Computerprogramme implementiert werden, d.h. als ein oder mehrere Module von Computerprogrammbefehlen, die zur Ausführung durch oder zur Steuerung des Betriebs von Datenverarbeitungsgeräten und insbesondere Werkzeugmaschinensteuerungen von Werkzeugmaschinen kodiert sind.

Hierin umfassen die Begriffe "Datenverarbeitungseinheit" alle Arten von Geräten, Vorrichtungen und Maschinen zur Verarbeitung von Daten, einschließlich beispielsweise eines programmierbaren Prozessors, eines Computers oder mehrerer Prozessoren oder Computer oder Computersystemen. Die Geräte können spezielle Logikschaltungen enthalten, z.B. ein FPGA (Field Programmable Gate Array) oder eine ASIC (Application Specific Integrated Circuit). Die Datenverarbeitungseinheit kann zusätzlich zur Hardware auch Code enthalten, der eine Ausführungsumgebung für das betreffende Computerprogramm schafft, z.B. Code, der die Prozessor-Firmware, ein Datenbankverwaltungssystem, ein Betriebssystem oder eine Kombination aus einem oder mehreren davon darstellt.

Hierin angesprochene Computerprogramme (die auch als Programm, Software, Softwareanwendung, Modul, Softwaremodul, Skript oder Code bezeichnet werden können) können in jeder Form von Programmiersprache geschrieben werden, einschließlich kompilierter oder interpretierter Sprachen, und sie können in jeder Form eingesetzt werden, einschließlich als eigenständige Programme oder als Module, Komponente, Unterprogramme oder andere Einheiten, die zur Verwendung in einer Computerumgebung geeignet ist. Dies betrifft insbesondere ML-Algorithmen, die bei der Erstellung von Bauteilprogrammen als Computerprogramm implementiert werden. Ein Computerprogramm kann, muss aber nicht, einer Datei in einem Dateisystem entsprechen. Ein Programm kann in einem Teil einer Datei gespeichert werden, der andere Programme oder Daten enthält, z.B. ein oder mehrere Skripte oder Parameter des Programms, oder in einer einzigen Datei, die dem betreffenden Programm zugeordnet ist, oder in mehreren koordinierten Dateien, z.B. Dateien, die ein oder mehrere Module, Unterprogramme oder Codeteile speichern. Ein Computerprogramm kann so eingesetzt werden, dass es auf einem Computer oder auf mehreren Computern ausgeführt wird, die sich an einem Standort befinden oder über mehrere Standorte verteilt und durch ein Kommunikationsnetz miteinander verbunden sind.

Die hierin beschriebenen Verfahren, Prozesse und logischen Abläufe können von einem oder mehreren programmierbaren Computern ausgeführt werden, die ein oder mehrere Computerprogramme ausführen, um Funktionen auszuführen, indem sie mit Eingabedaten arbeiten und Ausgaben erzeugen. Die Prozesse und logischen Abläufe können auch von speziellen logischen Schaltungen, z.B. einem FPGA oder einem ASIC, ausgeführt werden, und die Geräte können auch als solche implementiert werden.

Computersysteme, die für die Ausführung eines Computerprogramms geeignet sind, können beispielsweise auf allgemeinen oder speziellen Mikroprozessoren oder auf beiden oder auf jeder anderen Art von zentralen Recheneinheiten basieren. Im Allgemeinen empfängt eine zentrale Recheneinheit Befehle und Daten von einem Festwertspeicher oder einem RAM-Speicher oder beiden. Die wesentlichen Elemente eines Computersystems sind eine Recheneinheit zur Ausführung von Befehlen und ein oder mehrere Speichergeräte zur Speicherung von Befehlen und Daten sowie Dateneingänge und Datenausgänge, d.h. Daten-Schnittstellen, über die Daten (digitale Informationen) empfangen und abgegeben werden können.

Im Allgemeinen enthält ein Computersystem auch ein oder mehrere Geräte zur Speicherung von Daten oder ist operativ über Schnittstellen gekoppelt, um Daten von einem oder mehreren Massenspeichergeräten zu empfangen oder Daten an diese zu übertragen, oder beides. Ein Computer muss jedoch nicht über solche Geräte verfügen. Darüber hinaus kann ein Computer in ein anderes Gerät eingebettet sein, z.B. in eine Werkzeugmaschine, ein CAD-System, ein CAM-System, ein CAD-CAM-System. Zu den computerlesbaren Medien, die zur Speicherung von Computerprogrammbefehlen und Daten geeignet sind, gehören nichtflüchtige Speicher, einschließlich z.B. Halbleiterspeichergeräte, z.B. EPROM, EEPROM und Flash-Speichergeräte. Ein Prozessor und ein Speicher können durch spezielle Logikschaltungen ergänzt oder in diese integriert werden.

Um die Interaktion mit einem Bediener des Computersystems zu ermöglichen, können Anzeigegeräte (zur Anzeige von Information) und Eingabegeräte (zur Eingabe von Information) wie eine Tastatur und eine Maus verwendet werden, die über Datenschnittstellen mit dem Prozessor in Verbindung stehen.

Ausführungsformen der hierin offenbarten Konzepte können in einem Computersystem implementiert werden, das eine Back-End-Komponente, z.B. als Datenserver, oder eine Middleware-Komponente, z.B. einen Anwendungsserver, oder eine Front-End-Komponente, z.B. einen Client-Computer mit einer grafischen Benutzeroberfläche oder einen Web-Browser, über den ein Benutzer mit einer Implementierung des hierin beschriebenen Programme interagieren kann, oder eine beliebige Kombination aus einer oder mehreren solcher Back-End-, Middleware- oder Front-End-Komponenten enthält. Die Komponenten des Systems können durch jede Form oder jedes Medium der digitalen Datenkommunikation, z.B. ein Kommunikationsnetz, miteinander verbunden werden. Beispiele für Kommunikationsnetze sind LAN ("local area network") und ein WAN ("wide area network"), z.B. das Internet. Das Computersystem kann z.B. Clients und Server umfassen. Ein Client und ein Server sind in der Regel voneinander entfernt aufgestellt und interagieren in der Regel über ein Kommunikationsnetz. Die Beziehung zwischen Client und Server entsteht durch Computerprogramme, die auf den jeweiligen Computern laufen und in einer Client-Server-Beziehung zueinanderstehen.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Computerimplementiertes Verfahren, das von einem oder mehreren Computern ausgeführt wird, zum Erstellen von maschinennumerischen Steuerungsdatensätzen (17) zur Ansteuerung von Werkzeugmaschinen (9) in einem Nutzungsumfeld (3), wobei die Steuerungsdatensätze (17) von zugehörigen Werkzeugmaschinen (9) für die Bearbeitung von Ausgangsmaterialien, insbesondere für die Bearbeitung von Metall- oder Blechteilen mit Trenn-, Form- und/oder Fügefertigungsverfahren, eingelesen werden, mit den Schritten:
- Empfangen (Schritt 201) eines ersten Bauteildatensatzes (13), der ein digitales Konstruktionsmodell eines ersten Bauteils (21A) darstellt;
- Erstellen (Schritt 203) eines ersten maschinennumerischen Steuerungsdatensatzes (17) für den ersten Bauteildatensatz (13) unter Verwendung einer Steuerungsprogramm-Erzeugungssoftware (204), wobei die Steuerungsprogramm-Erzeugungssoftware (204) eine Bewertungsroutine (204A) umfasst, die einen trainierten Algorithmus (11) zum maschinellen Lernen mit einstellbaren Parametern (Pi) einsetzt, wobei Anfangswerte der einstellbaren Parameter (Pi) durch ein Training eines Trainingsalgorithmus (111) zum maschinellen Lernen bestimmt wurden, der dem trainierten Algorithmus (11) zum maschinellen Lernen entspricht;
- Zusammenstellen (Schritt 205) eines ersten Zusatztrainingsdatensatzes (31) aus dem ersten Bauteildatensatz (13) und dem erstellten maschinennumerischen Steuerungsdatensatz (17) und Ausgeben (Schritt 207) des ersten Zusatztrainingsdatensatzes (31) an eine Nutzungsumfeld-spezifische Trainingsdatenbank (119);
- Aktualisieren (Schritt 209) des Algorithmus (11) zum maschinellen Lernen durch Einstellen von Nutzungsumfeld-spezifischen Werten für die einstellbaren Parameter (Pi), wobei die Nutzungsumfeld-spezifischen Werte durch ein Training des Trainingsalgorithmus (111) zum maschinellen Lernen mit der Nutzungsumfeld-spezifischen Trainingsdatenbank (119) bestimmt wurden;
- Empfangen (Schritt 211) eines zweiten Bauteildatensatzes (13A), der ein digitales Konstruktionsmodell eines zweiten Bauteils (21A) darstellt; und
- Erstellen (Schritt 213) eines zweiten maschinennumerischen Steuerungsdatensatzes (17A) für den zweiten Bauteildatensatz (13A) unter Verwendung der Steuerungsprogramm-Erzeugungssoftware (204) und Durchlaufen der Bewertungsroutine (204), wobei der hinsichtlich der einstellbaren Parameter (Pi) aktualisierte Algorithmus (11) zum maschinellen Lernen eingesetzt wird.

2. Computerimplementiertes Verfahren nach Anspruch 1, ferner mit:
- Anpassen (Schritt 203A) des ersten maschinennumerischen Steuerungsdatensatzes (17) durch einen Maschinenprogrammierer (8B) zum Erstellen eines angepassten ersten maschinennumerischen Steuerungsdatensatz (17');
- Zusammenstellen (Schritt 205A) eines ersten weiteren Zusatztrainingsdatensatzes (31') aus dem angepassten ersten maschinennumerischen Steuerungsdatensatz (17') und dem ersten Bauteildatensatz (13) und Ausgeben (Schritt 207A) des ersten weiteren Zusatztrainingsdatensatzes (31') für eine Erweiterung der Nutzungsumfeld-spezifischen Trainingsdatenbank (119); und
- Aktualisieren (Schritt 209A) des Algorithmus (11) zum maschinellen Lernen durch Einstellen von Nutzungsumfeld-spezifischen Werten für die einstellbaren Parameter (Pi), wobei die Nutzungsumfeld-spezifischen Werte durch ein Training des Trainingsalgorithmus (111) zum maschinellen Lernen auf der um den ersten weiteren Zusatztrainingsdatensatz (31') erweiterten Nutzungsumfeld-spezifischen Trainingsdatenbank (119) bestimmt wurden.

3. Computerimplementiertes Verfahren nach Anspruch 1 oder 2, ferner mit:
- Anpassen (Schritt 211A) des zweiten maschinennumerischen Steuerungsdatensatzes (17A) durch einen Maschinenprogrammierer (8B) zum Erstellen eines angepassten zweiten maschinennumerischen Steuerungsdatensatzes (17A');
- Zusammenstellen (Schritt 215) eines zweiten weiteren Zusatztrainingsdatensatzes (31A') aus dem angepassten zweiten maschinennumerischen Steuerungsdatensatz (17A') und dem zweiten Bauteildatensatz (13A) und Ausgeben (Schritt 217) des zweiten weiteren Zusatztrainingsdatensatzes (31A') für eine Erweiterung der Nutzungsumfeld-spezifischen Trainingsdatenbank (119); und
- Aktualisieren (Schritt 219) des Algorithmus (11) zum maschinellen Lernen durch Einstellen von Nutzungsumfeld-spezifischen Werten für die einstellbaren Parameter (Pi), wobei die Nutzungsumfeld-spezifischen Werte durch ein Training des Trainingsalgorithmus (111) zum maschinellen Lernen auf der um den zweiten weiteren Zusatztrainingsdatensatz (31A') erweiterten Nutzungsumfeld-spezifischen Trainingsdatenbank (119) bestimmt wurden.

4. Computerimplementiertes Verfahren nach Anspruch 3, wobei der zweite maschinennumerische Steuerungsdatensatz (17A) angepasst wird
- von einem Konstrukteur (8A) durch modifizieren des zweiten Bauteildatensatzes (13A);
- von dem Maschinenprogrammierer (8B) nach Simulieren der Ansteuerung der Werkzeugmaschine (9) mit einem Simulationsprogramm der Fertigung des zweiten Bauteils (21A), wobei das Simulationsprogramm die Fertigung mit dem zweiten maschinennumerischen Steuerungsdatensatz (17A) simuliert; und/oder
- von einem Werkzeugmaschinenbediener (8C) nach Einlesen des zweiten maschinennumerischen Steuerungsdatensatzes (17A) in eine numerische Maschinensteuerung (9A) der Werkzeugmaschine (9) und Umwandeln des zweiten maschinennumerischen Steuerungsdatensatzes (17A) in eine Mehrzahl von Steuerungsroutinen (19), insbesondere nach einer Bearbeitung eines Ausgangsmaterials mit einer Bearbeitungseinheit (9B) der Werkzeugmaschine (9) durch Ansteuern der Bearbeitungseinheit (9B) mit den Steuerungsroutinen (19).

5. Computerimplementiertes Verfahren nach einem der vorhergehenden Ansprüche, ferner mit:
- Durchführen eines Trainings eines dem trainierten Algorithmus (11) zum maschinellen Lernen entsprechenden Trainingsalgorithmus (111) zum maschinellen Lernen auf der Nutzungsumfeld-spezifischen Trainingsdatenbank (119) zur Erzeugung der Nutzungsumfeld-spezifischen Werte der einstellbaren Parameter (Pi); und
- Übermitteln der Nutzungsumfeld-spezifischen Werte der einstellbaren Parameter (Pi) an die Steuerungsprogramm-Erzeugungssoftware zur Aktualisierung des Algorithmus (11) zum maschinellen Lernen mit den Nutzungsumfeld-spezifischen Werten der einstellbaren Parameter (Pi).

6. Computerimplementiertes Verfahren nach einem der vorhergehenden Ansprüche, wobei in der Nutzungsumfeld-spezifische Trainingsdatenbank (119) abgelegt wird:
- mindestens ein Zusatztrainingsdatensatz (31, 31', 31A, 31A'), der auf einen maschinennumerischen Steuerungsdatensatz (17, 17', 17A, 17A') zurückgeht, der im Nutzungsumfeld (3) erstellt wurde, und
- optional ein oder mehrere Trainingsdatensätze (117), die unabhängig vom Nutzungsumfeld (3) und insbesondere von einem Hersteller der Werkzeugmaschine (9) bereitgestellt wurden.

7. Computerimplementiertes Verfahren nach einem der vorhergehenden Ansprüche, wobei in die Zusatztrainingsdatensätze (31, 31', 31A, 31A') aufgenommen werden:
- mindestens eine geometrische Definition eines Abschnitts des Bauteils (21), und
- mindestens einen Fertigungsprozessparameter (29), der eine Bearbeitung mit der Werkzeugmaschine (9) definiert, der dem Abschnitt zugeordnet ist.

8. Computerimplementiertes Verfahren nach einem der vorhergehenden Ansprüche, wobei in die Zusatztrainingsdatensätze (31, 31', 31A, 31A') aufgenommen werden:
- Maschinenparameter, die der Werkzeugmaschine (9) zugeordnet sind,
- Nutzerparameter, die einem Nutzer der Werkzeugmaschine (9) zugeordnet sind, und
- Prozessablaufparameter, die dem Ablauf eines Bearbeitungsprozesses zugeordnet sind.

9. Computerimplementiertes Verfahren nach einem der vorhergehenden Ansprüche, wobei in die Zusatztrainingsdatensätze (31, 31', 31A, 31A') Daten aus einem oder mehreren der folgenden Einsatzgebiete und Steuerungsrahmenbedingungen aufgenommen werden:
- Zielgruppen-Identifikation, insbesondere Daten zum Kunden;
- Bearbeitungsprofile, insbesondere kundenspezifischen Bearbeitungsprofile, mit Parametern, die einen Bearbeitungsvorgang auf ein Bearbeitungsprofil abbilden, beispielsweise auf ein kundenspezifisches Bearbeitungsprofil;
- autonome Funktionen einer Werkzeugmaschine mit Parametern, die von einer Werkzeugmaschine eigenständig berücksichtigt werden, wie eine Anfahrfahne, eine Konturgröße, ein Spritzkreis, eine Schnittreihenfolge, ein Messpunkt, ein Messzyklus und/oder ein Werkzeugwechsel;
- Auswahl einer passenden Technologietabellen wie einer Laser-Technologietabelle und/oder eines Regelwerks;
- optimale Maschinenauswahl;
- Schneidzeit;
- Produktionskosten.

10. Computerimplementiertes Verfahren nach einem der vorhergehenden Ansprüche, wobei der Algorithmus (11) zum maschinellen Lernen als neuronales Netzwerk ausgebildet ist und eine Mehrzahl von neuronalen Kernnetzschichten enthält, die jeweils durch einen Satz von einstellbaren Parametern (Pi) als Gewichte definiert sind, und wobei der Schritt des Aktualisierens (Schritt 209A) umfasst:
- Aktualisieren des neuronalen Netzwerks durch Zuordnen von Nutzungsumfeld-spezifischen Werten zu den einstellbaren Parametern (Pi), wobei die Nutzungsumfeld-spezifischen Werte basierend auf der Nutzungsumfeld-spezifischen Trainingsdatenbank (119) bestimmt wurden.

11. Computerimplementiertes Verfahren nach einem der Ansprüche 1 bis 9, wobei der Algorithmus (11) zum maschinellen Lernen als evolutionärer Algorithmus, Support-Vector-Machine-Algorithmus oder als Algorithmus zur automatischen Induktion eines Entscheidungsbaums ausgebildet ist, das ein Modell umfasst, in das die einstellbaren Parametern (Pi) eingehen, und wobei der Schritt des Aktualisierens (Schritt 209A) umfasst:
- Aktualisieren des evolutionären Algorithmus, des Support-Vector-Machine-Algorithmus oder des Algorithmus zur automatischen Induktion eines Entscheidungsbaums durch Zuordnen von Nutzungsumfeld-spezifischen Werten zu den einstellbaren Parametern (Pi), wobei die Nutzungsumfeld-spezifischen Werte basierend auf der Nutzungsumfeld-spezifischen Trainingsdatenbank (119) bestimmt wurden.

12. CAD-CAM-System (7) zum Erstellen oder Empfangen von Bauteildatensätzen (13, 13A), die jeweils ein digitales Konstruktionsmodell eines Bauteils (21, 21A) darstellen, und zum Erstellen von maschinennumerischen Steuerungsdatensätzen (17, 17A) für die Bauteildatensätze (13, 13A), wobei die Steuerungsdatensätze (17) von zugehörigen Werkzeugmaschinen (9) für die Bearbeitung von Ausgangsmaterialien, insbesondere für die Bearbeitung von Metall- oder Blechteilen mit Trenn-, Form- und/oder Fügefertigungsverfahren, einlesbar sind, mit:
- mindestens einem computerlesbaren Speichermedium (15) zum Abspeichern der Bauteildatensätze (13, 13A) und der Steuerungsdatensätze (17, 17A);
- einem Prozessor (27), der eine Steuerungsprogramm-Erzeugungssoftware mit einem trainierten Algorithmus (11) zum maschinellen Lernen in seinen Arbeitsspeicher geladen hat, wobei der trainierte Algorithmus (11) zum maschinellen Lernen in einer Bewertungsroutine der Steuerungsprogramm-Erzeugungssoftware eingesetzt wird, mit einstellbaren Parametern (Pi) konfiguriert ist und dazu eingerichtet ist, dass der Prozessor das Verfahren nach einem der vorhergehenden Ansprüche ausführt und maschinennumerische Steuerungsdatensätze (17, 17A) zur Ansteuerung von mindestens einer Werkzeugmaschine (9) erstellt;
- einem Dateneingang (35B) zum Empfangen von Nutzungsumfeld-spezifischen Werten für die einstellbaren Parameter (Pi) des trainierten Algorithmus (11) zum maschinellen Lernen;
- einem Steuerungsdatenausgang (23) zur Ausgabe der erstellten maschinennumerischen Steuerungsdatensätze (17, 17A) an die mindestens eine Werkzeugmaschine (9) und
- mindestens einem Trainingsdatenausgang (33A, 33B, 33C) zur Ausgabe von Zusatztrainingsdatensätzen (31, 31', 31A, 31A'), die dem Nutzungsumfeld (3) zugeordnet sind und bei der Durchführung des Verfahrens nach einem der vorhergehenden Ansprüche ausgegeben werden.

13. Fertigungsanlage (1) für die Fertigung von Bauteilen (21, 2A) gemäß Bauteildatensätzen (13, 13A), die jeweils ein digitales Konstruktionsmodell eines Bauteils (21, 21A) darstellen, insbesondere für die Bearbeitung von Metall- oder Blechteilen mit Trenn-, Form- und/oder Fügefertigungsverfahren, mit:
- einem CAD-CAM-System (7) nach Anspruch 12 zum Erstellen von maschinennumerischen Steuerungsdatensätzen (17, 17A) für die Bauteildatensätze (13, 13A); und
- einer Werkzeugmaschine (9) mit einer numerischen Maschinensteuerung (9A) und einer Bearbeitungseinheit (9B), wobei die Werkzeugmaschine (9) in einem spezifischen Nutzungsumfeld (3) eingesetzt wird und die numerische Maschinensteuerung (9A) die vom CAD-CAM-System (7) erstellten maschinennumerischen Steuerungsdatensätze (17,17A) empfängt und in Steuerungsroutinen (19) umwandelt, mit denen die Bearbeitungseinheit (9B) zur Bearbeitung eines Werkstücks für der Herstellung von Bauteilen (21, 21A) angesteuert wird.

14. Fertigungsanlage (1) nach Anspruch 13, ferner mit einem Trainingscomputersystem (113) zum Bestimmen von Werten für einstellbare Parameter (Pi) eines Algorithmus (11) zum maschinellen Lernen, der in einer Bewertungsroutine einer Steuerungsprogramm-Erzeugungssoftware im CAD-CAM-System (7) eingesetzt wird, wobei das Trainingscomputersystem (113) umfasst:
- eine computerlesbare Nutzungsumfeld-spezifische Trainingsdatenbank (119) zum Abspeichern von Zusatztrainingsdatensätzen (31, 31', 31A, 31A'), wobei die Zusatztrainingsdatensätze (31, 31', 31A, 31A') ausgegeben werden vom CAD-CAM-System (7), insbesondere von einem CAD-System (7A) oder einem CAM-System (7B) des CAD-CAM-Systems (7), und optional von der numerischen Maschinensteuerung (9A),
- einen Prozessor (27), der einen Trainingsalgorithmus (111) zum maschinellen Lernen, der dem im CAD-CAM-System (7) eingesetzten trainierten Algorithmus (11) zum maschinellen Lernen entspricht, geladen hat und der so eingerichtet ist, dass er den Trainingsalgorithmus (111) zum maschinellen Lernen basierend auf der Nutzungsumfeld-spezifischen Trainingsdatenbank (119) trainiert und Werte für die einstellbaren Parameter (Pi) an das CAD-CAM-System (7) für die Verwendung in dem im CAD-CAM-System (7) eingesetzten trainierten Algorithmus (11) zum maschinellen Lernen ausgibt.

15. Werkzeugmaschine (9) mit einer numerischen Maschinensteuerung (9A) und einer Bearbeitungseinheit (9B), wobei die Werkzeugmaschine (9) in einem spezifischen Nutzungsumfeld (3) eingesetzt wird und die numerische Maschinensteuerung (9A) maschinennumerischen Steuerungsdatensätze (17, 17A) empfängt und in Steuerungsroutinen (19) umwandelt, mit denen die Bearbeitungseinheit (9B) zur Bearbeitung eines Werkstücks, insbesondere zur Bearbeitung von Metall- oder Blechteilen mit Trenn-, Form- und/oder Fügefertigungsverfahren, angesteuert wird, ferner mit:
- einem computerlesbaren Speichermedium (15_m) zum Abspeichern der Steuerungsdatensätze (17, 17A) und von den Steuerungsdatensätzen (17, 17A) zugrundeliegenden Bauteildatensätzen (13, 13A);
- einem Prozessor (27_m), der so eingerichtet ist, dass er aus den Steuerungsdatensätzen (17, 17A) die Steuerungsroutinen (19) erzeugt, wobei ein maschinennumerischer Steuerungsdatensatz (17, 17A) von einem vom Prozessor (27_m) geladenen trainierten Algorithmus (11_m) zum maschinellen Lernen in einen geänderten Steuerungsdatensatz (17_m) abgeändert werden kann, aus dem die Steuerungsroutinen (19) erzeugt werden, und wobei der Prozessor (27_m) ferner so eingerichtet ist, dass er einen Zusatztrainingsdatensatz (31_m) aus dem geänderten Steuerungsdatensatz (17_m) und dem zugehörigen Bauteildatensatz (13, 13A) zusammenstellt, der dem Nutzungsumfeld (3) zugeordnet ist;
- einem Trainingsdatenausgang (35C) zur Ausgabe des Zusatztrainingsdatensatzes (31_m) an eine Nutzungsumfeld-spezifische Trainingsdatenbank (119); und
- einem Parametereingang (33C) zum Empfangen von Nutzungsumfeld-spezifischen Werten für einstellbare Parameter (Pi) des trainierten Algorithmus (11_m) zum maschinellen Lernen;
- wobei der Prozessor ferner so eingerichtet ist, dass er ein Aktualisieren des Algorithmus (11) zum maschinellen Lernen durch Einstellen von Nutzungsumfeld-spezifischen Werten für die einstellbaren Parameter (Pi) ausführt, wobei die Nutzungsumfeld-spezifischen Werte durch ein Training eines Trainingsalgorithmus (111) zum maschinellen Lernen mit der Nutzungsumfeld-spezifischen Trainingsdatenbank (119) bestimmt wurden.

## Claims

1. A computer-implemented method, carried out by one or more computers, for creating computerized numerical control data sets (17) for controlling machine tools (9) in a usage environment (3), wherein the control data sets (17) are read in from associated machine tools (9) for machining starting materials, in particular for machining metal or sheet-metal parts using cutting, shaping and/or joining methods, the method comprising the steps:
- receiving (step 201) a first component data set (13) representing a digital design model of a first component (21A);
- creating (step 203) a first computerized numerical control data set (17) for the first component data set (13) using a control program generation software (204), wherein the control program generation software (204) includes an assessment routine (204A) which uses a trained machine learning algorithm (11) with settable parameters (Pi), wherein starting values of the settable parameters (Pi) were determined by training a machine learning training algorithm (111) which corresponds to the trained machine learning algorithm (11);
- compiling (step 205) a first additional training data set (31) from the first component data set (13) and the created computerized numerical control data set (17), and outputting (step 207) the first additional training data set (31) to a usage-environment-specific training database (119);
- updating (step 209) the machine learning algorithm (11) by setting usage-environment-specific values for the settable parameters (Pi), wherein the usage-environment-specific values were determined by training the machine learning training algorithm (111) using the usage-environment-specific training database (119);
- receiving (step 211) a second component data set (13A) representing a digital design model of a second component (21A); and
- creating (step 213) a second computerized numerical control data set (17A) for the second component data set (13A) using the control program generation software (204) and running the assessment routine (204), wherein the machine learning algorithm (11) used is the one which is updated with respect to the settable parameters (Pi).

2. The computer-implemented method according to claim 1, the method further comprising:
- adapting (step 203A) the first computerized numerical control data set (17) by a machine programmer (8B) in order to create an adapted first computerized numerical control data set (17');
- compiling (step 205A) a first further additional training data set (31') from the adapted first computerized numerical control data set (17') and the first component data set (13), and outputting (step 207A) the first further additional training data set (31') for extending the usage-environment-specific training database (119); and
- updating (step 209A) the machine learning algorithm (11) by setting usage-environment-specific values for the settable parameters (Pi), wherein the usage-environment-specific values were determined by training the machine learning training algorithm (111) to the usage-environment-specific training database (119) which has been extended to include the first further additional training data set (31').

3. The computer-implemented method according to claim 1 or 2, further comprising:
- adapting (step 211A) the second computerized numerical control data set (17A) by a machine programmer (8B) in order to create an adapted second computerized numerical control data set (17A');
- compiling (step 215) a second further additional training data set (31A') from the adapted second computerized numerical control data set (17A') and the second component data set (13A), and outputting (step 217) the second further additional training data set (31A') for extending the usage-environment-specific training database (119); and
- updating (step 219) the machine learning algorithm (11) by setting usage-environment-specific values for the settable parameters (Pi), wherein the usage-environment-specific values were determined by training the machine learning training algorithm (111) to the usage-environment-specific training database (119) which has been extended to include the second further additional training data set (31A').

4. The computer-implemented method according to claim 3, wherein the second computerized numerical control data set (17A) is adapted
- by a designer (8A) by modifying the second component data set (13A);
- by a machine programmer (8B) after simulating the control of the machine tool (9) using a simulation program for the manufacturing of the second component (21A), wherein the simulation program simulates the manufacturing using the second computerized numerical control data set (17A); and/or
- by a machine tool operator (8C) after reading the second computerized numerical control data set (17A) into a numerical machine controller (9A) of the machine tool (9) and converting the second computerized numerical control data set (17A) into a plurality of control routines (19), in particular after machining a starting material using a machining unit (9B) of the machine tool (9) by controlling the machining unit (9B) using the control routines (19).

5. The computer-implemented method according to one of the preceding claims, the method further comprising:
- executing a training of a machine learning training algorithm (111) that corresponds to the trained machine learning algorithm (11) to the usage-environment-specific training database (119) in order to generate the usage-environment-specific values of the settable parameters (Pi); and
- transmitting the usage-environment-specific values of the settable parameters (Pi) to the control program generation software in order to update the machine learning algorithm (11) using the usage-environment-specific values of the settable parameters (Pi).

6. The computer-implemented method according to one of the preceding claims, wherein the following is stored in the usage-environment-specific training database (119):
- at least one additional training data set (31, 31', 31A, 31A') which traces back to a computerized numerical control data set (17, 17', 17A, 17A') which was created in the usage environment (3), and
- optionally one or more training data sets (117) which were prepared independently of the usage environment (3), and in particular by a manufacturer of the machine tool (9).

7. The computer-implemented method according to one of the preceding claims, wherein the following is included in the additional training data sets (31, 31', 31A, 31A'):
- at least one geometrical definition of a section of the component (21), and
- at least one production process parameter (29) which defines machining using the machine tool (9) assigned to the section.

8. The computer-implemented method according to one of the preceding claims, wherein the following is included in the additional training data sets (31, 31', 31A, 31A'):
- machine parameters assigned to the machine tool (9),
- user parameters assigned to a user of the machine tool (9), and
- process sequence parameters assigned to the sequence of a machining process.

9. The computer-implemented method according to one of the preceding claims, wherein data from one or more of the following areas of use and control boundary conditions is included in the additional training data sets (31, 31', 31A, 31A'):
- a target group identification, in particular data concerning the customer;
- machining profiles, in particular customer-specific machining profiles, with parameters which map a machining process onto a customer-specific machining profile;
- autonomous functions of a machine tool with parameters which are independently taken into account by a machine tool, such as a lead-in, a contour size, a spray circle, a cutting sequence, a measurement point, a measurement cycle and/or a tool change;
- selection of an appropriate technology tables such as a laser technology table and/or a set of rules;
- optimum machine selection;
- cutting time;
- production costs.

10. The computer-implemented method according to one of the previous claims, wherein the machine learning algorithm (11) is designed as a neural network and contains a plurality of neural core network layers, each defined by a set of settable parameters (Pi) as weights, and wherein the updating step (step 209A) includes:
- updating the neural network by assigning usage-environment-specific values to the settable parameters (Pi), wherein the usage-environment-specific values were determined on the basis of the usage-environment-specific training database (119).

11. The computer-implemented method according to one of claims 1 to 9, wherein the machine learning algorithm (11) is an evolutionary algorithm, a support vector machine algorithm, or an algorithm for automatically inducing a decision tree, the algorithm including a model into which the settable parameters (Pi) go, and wherein the updating step (step 209A) includes:
- updating the evolutionary algorithm, the support vector machine algorithm or the algorithm for automatically inducing a decision tree by assigning usage-environment-specific values to the settable parameters (Pi), wherein the usage-environment-specific values were determined on the basis of the usage-environment-specific training database (119).

12. A CAD/CAM system (7) for creating or receiving component data sets (13, 13A), each representing a digital design model of a component (21, 21A), and for creating computerized numerical control data sets (17, 17A) for the component data sets (13, 13A), wherein the control data sets (17) can be read in by associated machine tools (9) for machining starting materials, in particular for machining metal or sheet-metal parts using cutting, shaping and/or joining methods, comprising:
- at least one computer-readable storage medium (15) configured to store the component data sets (13, 13A) and the control data sets (17, 17A);
- a processor (27) which has loaded into its main working memory a control program generation software comprising a trained machine learning algorithm (11), wherein the trained machine learning algorithm (11) is used in an assessment routine of the control program generation software, is configured with settable parameters (Pi), and is configured such that the processor executes the method according to one of the preceding claims and creates computerized numerical control data sets (17, 17A) for controlling at least one machine tool (9);
- a data input (35B) for receiving usage-environment-specific values for the settable parameters (Pi) of the trained machine learning algorithm (11);
- a control data output (23) for outputting the created computerized numerical control data sets (17, 17A) to the at least one machine tool (9); and
- at least one training data output (33A, 33B, 33C) for outputting additional training data sets (31, 31', 31A, 31A') assigned to the usage environment (3) and are output when the method according to one of the preceding claims is executed.

13. A production facility (1) for producing components (21, 2A) according to component data sets (13, 13A), each of which representing a digital design model of a component (21, 21A), in particular for the machining of metal or sheet metal parts using cutting, shaping and/or joining methods, comprising:
- a CAD/CAM system (7) according to claim 12 for creating computerized numerical control data sets (17, 17A) for the component data sets (13, 13A); and
- a machine tool (9) comprising a numerical machine controller (9A) and a machining unit (9B), wherein the machine tool (9) is used in a specific usage environment (3) and the numerical machine controller (9A) receives the computerized numerical control data sets (17, 17A) created by the CAD/CAM system (7) and converts them into control routines (19) which are used to control the machining unit (9B) to machine a workpiece for manufacturing components (21, 21A).

14. The production facility (1) according to claim 13, further comprising a training computer system (113) for determining values for settable parameters (Pi) of a machine learning algorithm (11) which is used in an assessment routine of a control program generation software in the CAD/CAM system (7), wherein the training computer system (113) comprises:
- a computer-readable usage-environment-specific training database (119) for storing additional training data sets (31, 31', 31A, 31A'), wherein the additional training data sets (31, 31', 31A, 31A') are output from the CAD/CAM system (7), in particular from a CAD system (7A) or a CAM system (7B) of the CAD/CAM system (7) and optionally from the numerical machine controller (9A),
- a processor (27) which has loaded a machine learning training algorithm (111) which corresponds to the trained machine learning algorithm (11) used in the CAD/CAM system (7) and is configured to train the machine learning training algorithm (111) on the basis of the usage-environment-specific training database (119) and to output values for the settable parameters (Pi) to the CAD/CAM system (7) for use in the trained machine learning algorithm (11) used in the CAD/CAM system (7).

15. A machine tool (9) comprising a numerical machine controller (9A) and a machining unit (9B), wherein the machine tool (9) is used in a specific usage environment (3) and the numerical machine controller (9A) receives computerized numerical control data sets (17, 17A) and converts them into control routines (19) which are used to control the machining unit (9B) to machine a workpiece, in particular to machine metal or sheet-metal parts using cutting, shaping and/or joining methods, further comprising:
- a computer-readable storage medium (15_m) for storing the control data sets (17, 17A) and component data sets (13, 13A) on which the control data sets (17, 17A) are based;
- a processor (27_m) which is configured to generate the control routines (19) from the control data sets (17, 17A), wherein a computerized numerical control data set (17, 17A) can be modified into a changed control data set (17_m) by a trained machine learning algorithm (11_m) loaded by the processor (27_m), from which changed control data set the control routines (19) are generated, and wherein the processor (27_m) is further configured such that it compiles an additional training data set (31_m) from the modified control data set (17_m) and the associated component data set (13, 13A), the additional training data set being assigned to the usage environment (3);
- a training data output (35C) for outputting the additional training data set (31_m) to a usage-environment-specific training database (119); and
- a parameter input (33C) for receiving usage-environment-specific values for settable parameters (Pi) of the trained machine learning algorithm (11_m);
- wherein the processor is further configured to execute an updating of the machine learning algorithm (11) by setting usage-environment-specific values for the settable parameters (Pi), wherein the usage-environment-specific values were determined by a training of a machine learning training algorithm (111) using the usage-environment-specific training database (119).

## Revendications

1. Procédé implémenté par un ordinateur, exécuté par un ou plusieurs ordinateurs pour créer des jeux de données de commande numérique de machine (17) pour la commande de machines-outils (9) dans un environnement d'utilisation (3), dans lequel les jeux de données de commande (17) sont lus par des machines-outils (9) correspondantes pour l'usinage de matières premières, en particulier pour l'usinage de pièces métalliques ou de tôles par des procédés de fabrication par découpe, formage et/ou assemblage, comprenant les étapes suivantes :
- réception (étape 201) d'un premier jeu de données de composant (13) représentant un modèle de conception numérique d'un premier composant (21A) ;
- création (étape 203) d'un premier jeu de données de commande numérique de machine (17) pour le premier jeu de données de composant (13) à l'aide d'un logiciel de génération de programme de commande (204), dans lequel le logiciel de génération de programme de commande (204) comprend une routine d'évaluation (204A) qui utilise un algorithme d'apprentissage automatique (11) entraîné avec des paramètres réglables (Pi), dans lequel les valeurs initiales des paramètres réglables (Pi) sont déterminées par l'entraînement d'un algorithme d'entraînement d'apprentissage automatique (111) qui correspond à l'algorithme d'apprentissage automatique (11) entraîné ;
- compilation (étape 205) d'un premier jeu de données d'entraînement supplémentaire (31) à partir du premier jeu de données de composant (13) et du jeu de données de commande numérique de machine (17) créé, et envoi (étape 207) du premier jeu de données d'entraînement supplémentaire (31) à une base de données d'entraînement spécifique à l'environnement d'utilisation (119) ;
- mise à jour (étape 209) de l'algorithme d'apprentissage automatique (11) en définissant des valeurs spécifiques à l'environnement d'utilisation pour les paramètres réglables (Pi), dans lequel les valeurs spécifiques à l'environnement d'utilisation sont déterminées en entraînant l'algorithme d'entraînement d'apprentissage automatique (111) avec la base de données d'entraînement spécifique à l'environnement d'utilisation (119) ;
- réception (étape 211) d'un deuxième jeu de données de composant (13A) représentant un modèle de conception numérique d'un deuxième composant (21A) ; et
- création (étape 213) d'un deuxième jeu de données de commande numérique de machine (17A) pour le deuxième jeu de données de composant (13A) à l'aide du logiciel de génération de programme de commande (204), et exécution de la routine d'évaluation (204), dans lequel l'algorithme d'apprentissage automatique (11) mis à jour en fonction des paramètres réglables (Pi) est utilisé.

2. Procédé implémenté par un ordinateur selon la revendication 1, comprenant en outre les étapes suivantes :
- adaptation (étape 203A) du premier jeu de données de commande numérique de machine (17) par un programmeur de machine (8B) pour créer un premier jeu de données de commande numérique de machine (17') adapté ;
- compilation (étape 205A) d'un premier jeu de données d'entraînement supplémentaire additionnel (31') à partir du premier jeu de données de commande numérique de machine (17') adapté et du premier jeu de données de composant (13), et envoi (étape 207A) du premier jeu de données d'entraînement supplémentaire additionnel (31') pour une mise à niveau de la base de données d'entraînement spécifique à l'environnement d'utilisation (119) ; et
- mise à jour (étape 209A) de l'algorithme d'apprentissage automatique (11) en définissant des valeurs spécifiques à l'environnement d'utilisation pour les paramètres réglables (Pi), dans lequel les valeurs spécifiques à l'environnement d'utilisation sont déterminées en entraînant l'algorithme d'entraînement d'apprentissage automatique (111) sur la base de données d'entraînement spécifique à l'environnement d'utilisation (119) mise à niveau par le premier jeu de données d'entraînement supplémentaire additionnel (31').

3. Procédé implémenté par un ordinateur selon la revendication 1 ou 2, comprenant en outre les étapes suivantes :
- adaptation (étape 211A) du deuxième jeu de données de commande numérique de machine (17A) par un programmeur de machine (8B) pour créer un deuxième jeu de données de commande numérique de machine (17A') adapté ;
- compilation (étape 215) d'un deuxième jeu de données d'entraînement supplémentaire additionnel (31A') à partir du deuxième jeu de données de commande numérique de machine (17A') adapté et du deuxième jeu de données de composant (13A), et envoi (étape 217) du deuxième jeu de données d'entraînement supplémentaire additionnel (31A') pour une mise à niveau de la base de données d'entraînement spécifique à l'environnement d'utilisation (119) ; et
- mise à jour (étape 219) de l'algorithme d'apprentissage automatique (11) en définissant des valeurs spécifiques à l'environnement d'utilisation pour les paramètres réglables (Pi), dans lequel les valeurs spécifiques à l'environnement d'utilisation sont déterminées en entraînant l'algorithme d'entraînement d'apprentissage automatique (111) sur la base de données d'entraînement spécifique à l'environnement d'utilisation (119) mise à niveau par le deuxième jeu de données d'entraînement supplémentaire additionnel (31A').

4. Procédé implémenté par un ordinateur selon la revendication 3, dans lequel le deuxième jeu de données de commande numérique de machine (17A) est adapté
- par un concepteur (8A) en modifiant le deuxième jeu de données de composant (13A) ;
- par le programmeur de machine (8B) après avoir simulé la commande de la machine-outil (9) avec un programme de simulation de la fabrication du deuxième composant (21A), dans lequel le programme de simulation simule la fabrication avec le deuxième jeu de données de commande numérique de machine (17A) ; et/ou
- par un opérateur de machine-outil (8C) après lecture du deuxième jeu de données de commande numérique de machine (17A) dans une commande numérique de machine (9A) de la machine-outil (9) et conversion du deuxième jeu de données de commande numérique de machine (17A) en une pluralité de routines de commande (19), en particulier après l'usinage d'une matière première avec une unité d'usinage (9B) de la machine-outil (9) en commandant l'unité d'usinage (9B) avec les routines de commande (19).

5. Procédé implémenté par un ordinateur selon l'une des revendications précédentes, comprenant en outre les étapes suivantes :
- mise en œuvre d'un entraînement d'un algorithme d'entraînement d'apprentissage automatique (111) correspondant à l'algorithme d'apprentissage automatique (11) entraîné sur la base de données d'entraînement spécifique à l'environnement d'utilisation (119) afin de générer les valeurs spécifiques à l'environnement d'utilisation des paramètres réglables (Pi) ; et
- transmission des valeurs spécifiques à l'environnement d'utilisation des paramètres réglables (Pi) au logiciel de génération de programme de commande pour la mise à jour de l'algorithme d'apprentissage automatique (11) avec les valeurs spécifiques à l'environnement d'utilisation des paramètres réglables (Pi).

6. Procédé implémenté par un ordinateur selon l'une des revendications précédentes, dans lequel les éléments suivants sont déposés dans la base de données d'entraînement spécifique à l'environnement d'utilisation (119) :
- au moins un jeu de données d'entraînement supplémentaire (31, 31', 31A, 31A') basé sur un jeu de données de commande numérique de machine (17, 17', 17A, 17A') qui a été créé dans l'environnement d'utilisation (3), et
- facultativement un ou plusieurs jeux de données d'entraînement (117), qui sont fournis indépendamment de l'environnement d'utilisation (3) et en particulier par un fabricant de la machine-outil (9).

7. Procédé implémenté par un ordinateur selon l'une des revendications précédentes, dans lequel les jeux de données d'entraînement supplémentaires (31, 31', 31A, 31A') comprennent :
- au moins une définition géométrique d'une section du composant (21), et
- au moins un paramètre de procédé de fabrication (29) définissant un usinage avec la machine-outil (9) associé à la section.

8. Procédé implémenté par un ordinateur selon l'une des revendications précédentes, dans lequel les jeux de données d'entraînement supplémentaires (31, 31', 31A, 31A') comprennent :
- des paramètres de machine associés à la machine-outil (9),
- des paramètres d'utilisateur associés à un utilisateur de la machine-outil (9), et
- des paramètres de déroulement de processus qui sont associés au déroulement d'un processus d'usinage.

9. Procédé implémenté par un ordinateur selon l'une des revendications précédentes, dans lequel des données provenant d'un ou plusieurs des domaines d'application et des conditions de cadre de commande suivants sont incluses dans les jeux de données d'entraînement supplémentaires (31, 31', 31A, 31A') :
- identification de groupes cibles, en particulier de données client ;
- profils d'usinage, en particulier profils d'usinage spécifiques au client, avec des paramètres qui mappent une opération d'usinage vers un profil d'usinage, par exemple vers un profil d'usinage spécifique au client ;
- fonctions autonomes d'une machine-outil avec des paramètres pris en compte indépendamment par une machine-outil, tels qu'un drapeau d'approche, une taille de contour, un cercle de pulvérisation, une séquence de coupe, un point de mesure, un cycle de mesure et/ou un changement d'outil ;
- sélection d'une table technologique appropriée, telle qu'une table technologique laser et/ou un ensemble de règles ;
- sélection optimale de la machine ;
- temps de coupe ;
- coûts de production.

10. Procédé implémenté par un ordinateur selon l'une des revendications précédentes, dans lequel l'algorithme d'apprentissage automatique (11) est conçu comme un réseau neuronal et comprend une pluralité de couches de réseau neuronal central, définies chacune par un ensemble de paramètres réglables (Pi) comme des pondérations, et dans lequel l'étape de mise à jour (étape 209A) comprend :
- la mise à jour du réseau neuronal en attribuant des valeurs spécifiques à l'environnement d'utilisation aux paramètres réglables (Pi), dans lequel les valeurs spécifiques à l'environnement d'utilisation sont déterminées sur la base de la base de données d'entraînement spécifique à l'environnement d'utilisation (119).

11. Procédé implémenté par un ordinateur selon l'une des revendications 1 à 9, dans lequel l'algorithme d'apprentissage automatique (11) est conçu comme un algorithme évolutif, un algorithme de machine à vecteurs de support ou un algorithme d'induction automatique d'un arbre de décision, qui comprend un modèle dans lequel les paramètres réglables (Pi) sont inclus, et dans lequel l'étape de mise à jour (étape 209A) comprend :
- la mise à jour de l'algorithme évolutif, de l'algorithme de machine à vecteurs de support ou de l'algorithme d'induction automatique d'un arbre de décision en attribuant des valeurs spécifiques à l'environnement d'utilisation aux paramètres réglables (Pi), dans lequel les valeurs spécifiques à l'environnement d'utilisation sont déterminées sur la base de la base de données d'entraînement spécifique à l'environnement d'utilisation (119).

12. Système de CAO-FAO (7) pour la création ou la réception de jeux de données de composant (13, 13A), représentant chacun un modèle de conception numérique d'un composant (21, 21A), et pour la création de jeux de données de commande numérique de machine (17, 17A) pour les jeux de données de composant (13, 13A), dans lequel les jeux de données de commande (17) peuvent être lus par des machines-outils (9) correspondantes pour l'usinage de matières premières, en particulier pour l'usinage de pièces métalliques ou de tôles par des procédés de fabrication par découpe, formage et/ou assemblage, comprenant :
- au moins un support de stockage lisible par un ordinateur (15) pour stocker les jeux de données de composant (13, 13A) et les jeux de données de commande (17, 17A) ;
- un processeur (27) ayant chargé un logiciel de génération de programme de commande avec un algorithme d'apprentissage automatique (11) entraîné dans sa mémoire de travail, dans lequel l'algorithme d'apprentissage automatique (11) entraîné est utilisé dans une routine d'évaluation du logiciel de génération de programme de commande, est configuré avec des paramètres réglables (Pi), et est configuré de telle sorte que le processeur exécute le procédé selon l'une des revendications précédentes et crée des jeux de données de commande numérique de machine (17, 17A) pour commander au moins une machine-outil (9) ;
- une entrée de données (35B) pour recevoir des valeurs spécifiques à l'environnement d'utilisation pour les paramètres réglables (Pi) de l'algorithme d'apprentissage automatique (11) entraîné ;
- une sortie de données de commande (23) pour envoyer les jeux de données de commande numérique de machine (17, 17A) créés à ladite au moins une machine-outil (9), et
- au moins une sortie de données d'entraînement (33A, 33B, 33C) pour envoyer des jeux de données d'entraînement supplémentaires (31, 31', 31A, 31A') qui sont associés à l'environnement d'utilisation (3) et qui sont envoyés lors de la mise en œuvre du procédé selon l'une des revendications précédentes.

13. Installation de fabrication (1) pour la fabrication de composants (21, 2A) selon des jeux de données de composant (13, 13A) qui représentent chacun un modèle de conception numérique d'un composant (21, 21A), en particulier pour l'usinage de pièces métalliques ou de tôles par des procédés de fabrication par découpe, formage et/ou assemblage, comprenant :
- un système de CAO-FAO (7) selon la revendication 12 pour créer des jeux de données de commande numérique de machine (17, 17A) pour les jeux de données de composant (13, 13A) ; et
- une machine-outil (9) avec une commande numérique de machine (9A) et une unité d'usinage (9B), dans lequel la machine-outil (9) est utilisée dans un environnement d'utilisation (3) spécifique et la commande numérique de machine (9A) reçoit les jeux de données de commande numérique de machine (17, 17A) créés par le système de CAO-FAO (7) et les convertit en routines de commande (19) avec lesquelles l'unité d'usinage (9B) est commandée afin d'usiner une pièce pour la production de composants (21, 21A).

14. Installation de fabrication (1) selon la revendication 13, comprenant en outre un système informatique d'entraînement (113) permettant de déterminer les valeurs de paramètres réglables (Pi) d'un algorithme d'apprentissage automatique (11) utilisé dans une routine d'évaluation d'un logiciel de génération de programme de commande du système de CAO-FAO (7), dans laquelle le système informatique d'entraînement (113) comprend :
- une base de données d'entraînement spécifique à l'environnement d'utilisation (119), lisible par un ordinateur et destinée à stocker des jeux de données d'entraînement supplémentaires (31, 31', 31A, 31A'), dans laquelle les jeux de données d'entraînement supplémentaires (31, 31', 31A, 31A') sont générés par le système de CAO-FAO (7), en particulier par un système CAO (7A) ou un système FAO (7B) du système CAO-FAO (7), et facultativement par la commande numérique de machine (9A),
- un processeur (27) qui a chargé un algorithme d'entraînement d'apprentissage automatique (111) correspondant à l'algorithme d'apprentissage automatique (11) entraîné utilisé dans le système de CAO-FAO (7) et qui est configuré de manière à entraîner l'algorithme d'entraînement d'apprentissage automatique (111) sur la base de la base de données d'entraînement spécifique à l'environnement d'utilisation (119) et pour envoyer des valeurs pour les paramètres réglables (Pi) au système de CAO-FAO (7) pour une utilisation dans l'algorithme d'apprentissage automatique (11) entraîné utilisé dans le système de CAO-FAO (7).

15. Machine-outil (9) équipée d'une commande numérique de machine (9A) et d'une unité d'usinage (9B), dans laquelle la machine-outil (9) est utilisée dans un environnement d'utilisation (3) spécifique et la commande numérique de machine (9A) reçoit des jeux de données de commande numérique de machine (17, 17A) et les convertit en routines de commande (19), avec lesquelles l'unité d'usinage (9B) est commandée pour l'usinage d'une pièce, en particulier pour l'usinage de pièces métalliques ou de tôles par des procédés de fabrication par découpe, formage et/ou assemblage, comportant en outre :
- un support de stockage lisible par un ordinateur (15_m) pour stocker les jeux de données de commande (17, 17A) et les jeux de données de composant (13, 13A) sur lesquels sont basés les jeux de données de commande (17, 17A) ;
- un processeur (27_m) configuré pour générer les routines de commande (19) à partir des jeux de données de commande (17, 17A), dans laquelle un jeu de données de commande numérique de machine (17, 17A) peut être modifié par un algorithme entraîné (11_m) d'apprentissage automatique chargé par le processeur (27_m) dans un jeu de données de commande modifié (17_m) à partir duquel les routines de commande (19) sont générées, et dans laquelle le processeur (27_m) est en outre configuré de manière à compiler un jeu de données d'entraînement supplémentaire (31_m) à partir du jeu de données de commande modifié (17_m) et du jeu de données de composant (13, 13A) correspondant, qui est associé à l'environnement d'utilisation (3) ;
- une sortie de données d'entraînement (35C) pour envoyer le jeu de données d'entraînement supplémentaire (31_m) à une base de données d'entraînement spécifique à l'environnement d'utilisation (119) ; et
- une entrée de paramètre (33C) pour recevoir des valeurs spécifiques à l'environnement d'utilisation pour des paramètres réglables (Pi) de l'algorithme entraîné (11_m) d'apprentissage automatique,
- dans laquelle le processeur est en outre configuré de manière à mettre à jour l'algorithme d'apprentissage automatique (11) en définissant des valeurs spécifiques à l'environnement d'utilisation pour les paramètres réglables (Pi), dans laquelle les valeurs spécifiques à l'environnement d'utilisation sont déterminées en entraînant un algorithme d'entraînement d'apprentissage automatique (111) avec la base de données d'entraînement spécifique à l'environnement d'utilisation (119).
